# EUROPÄISCHE PATENTSCHRIFT

(11) **EP 1 765 938 B1**
(45) Veröffentlichungstag und Bekanntmachung des Hinweises auf die Patenterteilung: **21.04.2010**
(21) Anmeldenummer: 06742767.4
(22) Anmeldetag: 02.05.2006
(51) Int. Cl.: C09D 5/44

(54) **ANODISCHER ELEKTROTAUCHLACK, DESSEN HERSTELLUNG UND VERWENDUNG, VERWENDUNG VON PLÄTTCHENFÖRMIGEM METALLPIGMENT UND BESCHICHTETER GEGENSTAND**
ANODIC ELECTRODEPOSITION PAINT, PRODUCTION AND USE THEREOF, USE OF LAMELLAR METAL PIGMENT, AND COATED OBJECT
PEINTURE PAR ELECTROLYSE ANODIQUE, SA PRODUCTION ET SON UTILISATION, UTILISATION DE PIGMENTS METALLIQUES EN FORME DE PASTILLES ET OBJET REVETU

(30) Priorität: 02.05.2005 DE 102005020767
(43) Veröffentlichungstag der Anmeldung: 28.03.2007
(73) Patentinhaber: Eckart GmbH, 91235 Hartenstein (DE)
(72) Erfinder: SCHUSTER, Thomas, 91207 Lauf (DE); SCHRAMM, Christian, 91217 Hersbruck (DE); MAUL, Robert, 90610 Winkelhaid (DE); WEISS, Harald, 90765 Fürth (DE); HECKEL, Caroline, 91235 Velden (DE)
(74) Vertreter: Walcher, Armin
(86) Internationale Anmeldenummer: PCT/EP2006/004089
(87) Internationale Veröffentlichungsnummer: WO 2006/117189

(56) Entgegenhaltungen:
- WO-A-03/053599
- US-B1- 6 436 260

## Beschreibung

Die Erfindung betrifft einen anodischen Elektrotauchlack, der Metalleffektpigmente enthält. Die Erfindung betrifft des weiteren ein Verfahren zur Herstellung eines anodischen Elektrotauchlacks sowie die Verwendung von plättchenförmigen Metalleffektpigmenten in einem Elektrotauchlack oder bei der Elektrotauchlackierung. Die Erfindung betrifft auch die Verwendung des Elektrotauchlacks sowie einen beschichteten Gegenstand.

Die Elektrotauchlackierung (ETL) ist ein Verfahren zur Applikation bestimmter wasserlöslicher Lacke, sogenannter Elektrotauchlacke, auf elektrisch leitfähigen Untergründen, wie beispielsweise einem Werkstück. Zwischen einem in ein Lackbad eingetauchten Werkstück und einer Gegenelektrode wird ein elektrisches Gleichspannungsfeld angelegt. Es wird dabei unterschieden zwischen der anodischen Abscheidung, der sogenannten anodischen Elektrotauchlackierung (ATL), bei der das Werkstück als Anode oder Pluspol geschaltet ist, und der kathodischen Abscheidung, der sogenannten kathodischen Elektrotauchlackierung (KTL), bei der das Werkstück als Kathode oder als Minuspol geschaltet ist.

Das Lackbindemittel enthält funktionelle Gruppen bestimmter Polarität, die durch Neutralisation in Salzform und dadurch in Wasser kolloidal gelöst vorliegen. In der Nähe der Elektrode (innerhalb der Diffusionsgrenzschicht) entstehen aufgrund der Hydrolyse bei der KTL Hydroxidionen bzw. bei der ATL H⁺-lonen. Diese Ionen reagieren mit dem Bindemittelsalz, wobei die funktionalisierten Bindemittel ihre Salzform verlieren ("Aussalzen"), wasserunlöslich werden und an der Oberfläche des Werkstückes koagulieren. Im weiteren Verlauf verlieren die koagulierten Bindemittelteilchen infolge von Elektroosmosevorgängen an Wasser, wobei eine weitere Verdichtung auftritt. Schließlich wird das Werkstück dem Tauchbad entnommen, in einem mehrstufigen Spülprozeß von nicht koagulierten Lackteilchen befreit und bei Temperaturen von 150 - 190 °C eingebrannt (Brock, Groteklaes, Mischke, "Lehrbuch der Lacktechnologie" 2. Auflage, Vincentz Verlag1998, S.288 ff).

Die Elektrotauchlackierung hat gegenüber konventionellen Lackierverfahren wie Lackierung mit Naßlacken oder Pulverlacken mehrere wirtschaftliche und ökologische Vorteile.

In erster Linie ist hier die exakt einstellbare Schichtdicke zu nennen. Im Vergleich mit Pulverlackierungen werden bei der Elektrotauchlackierung auch schwer zugängliche Stellen des Werkstücks einheitlich lackiert. Dies resultiert aus folgender Tatsache: zunächst findet die Abscheidung des Bindemittels an Stellen hoher Feldstärke wie Ecken und Kanten statt. Der sich bildende Film weist jedoch einen hohen elektrischen Widerstand auf. Daher verschieben sich die Feldlinien zu anderen Bereichen des Werkstücks und konzentrieren sich am Schluß des Beschichtungsvorganges ganz auf die unzugänglichsten Stellen, wie beispielsweise im Inneren des Werkstückes liegende Bereiche oder Stellen (Innenbeschichtung). Mit der Elektrotauchlackierung (ETL) sind mithin beliebig geformte Werkstücke lackierbar, solange sie elektrisch leitfähig sind. Mit der ETL sind weiterhin vorteilhaft Eigenschaften wie minimale Lösemittelemissionen, optimale Materialausbeute und Nichtbrennbarkeit verbunden. Man erhält Tropfen- und läuferfreie Anstriche. Die Elektrotauchlackierung wird automatisiert durchgeführt und ist dadurch ein sehr preisgünstiges Lackierverfahren, zumal sie sich bei nur geringen Stromdichten von einigen mA/cm² durchführen läßt.

Aufgrund des einfachen und höchst kostengünstigen Applikationsverfahrens findet die Elektrotauchlackierung zur Zeit in zahlreichen Systemen ihren Einsatz. Am gängigsten sind Grundierungen, z.B. bei der Automobilserienlackierung, und einschichtige Decklackierungen zu nennen. ETL-Lackierungen finden sich beispielsweise auf Radiatoren, Schaltschränken, Büromöbel, im Bau, bei Eisen- und Haushaltswaren, in der Lagertechnik bzw. beim Regalbau, in der Klima- und Lichttechnik und im Apparate- und Maschinenbau.

Die anodische Tauchlackierung (ATL) wird für spezielle Einsatzgebiete und Materialien angewandt. Sie ist vor allem geeignet für die Decklackierung von Nichteisen-Metallen mit hochtransparenten Schutzschichten sowie für die Abscheidung gefärbter Lacke. Durch Einbrennen erzielt man sehr homogene, glatte und korrosionsresistente Oberflächen. Diese weisen nahezu keine Schichtdickenstreuung (Kantenaufbau) auf. Aus diesem Grund lassen sich auch geometrisch komplex geformte Gegenstände lückenlos mit diesem Verfahren beschichten. Ebenso erreichen die durch anodische Elektrotauchlackierung aufgebrachten Lacke sehr gute Werte in der Temperatur- und in der Alterungsbeständigkeit. Die Umweltverträglichkeit aufgrund der weitgehenden Abwesenheit von organischem Lösungsmittel rundet die Vorteile der anodischen Tauchlackierung als höchst effizientes und attraktives Beschichtungsverfahren ab.

Bisher im Gebrauch befindliche Elektrotauchlacke sind Wasserlacke, die als Bindemittel meist Epoxidharze, seltener auch Polyacrylate enthalten. Die Elektrotauchlacke können konventionelle Farbpigmente enthalten, wobei es sich i.d.R. um organische und anorganische Farbpigmente handelt. Die Palette der tatsächlich kommerziell eingesetzten Farbtöne ist jedoch eng begrenzt. Die Verwendung von Effektpigmenten im Elektrotauchlack ist bisher jedoch kommerziell nicht bekannt.

Die DE 199 60 693 A1 offenbart ein Verfahren zur anodischen Elektrotauchlackierung, welches 1 bis 15 Gew-%, bezogen auf den Bindemittelfestkörper des Elektrotauchlackes eines oder mehrerer Phosphorsäure-Epoxyester und/oder Phosphonsäure-Epoxyester enthält. In der DE 199 60 693 A1 ist angegeben, daß dem Elektrotauchlack auch Pigmentebeispielsweise Metallpigmente zugesetzt werden könnten. Es hat sich jedoch gezeigt, daß der bloße Zusatz von Metallpigmenten bei dem aus der DE 199 60 693 A1 bekannten anodischen Elektrotauchlackverfahren nicht ausreicht, um die Metallpigmente auf einem Werkstück abzuscheiden.

Die EP 0 477 433 A1 offenbart mit Kunstharzen beschichtete Metallpigmente, wobei zwischen Metallpigmentoberfläche und der Kunstharzschicht eine sehr dünne Siloxanschicht als Haftvermittler aufgebracht ist. Diese Pigmente lassen sich jedoch nicht als solche zur Elektrotauchlackierung einsetzen. Ferner ist aus dieser Schrift kein Hinweis zur Elektrotauchlackierung vorhanden.

Die DE 690 02 991 T2 offenbart eine Metallpigmenthaltiges Überzugsmittel auf wässriger Basis, welches auch zum Elektropolieren geeignet sein soll. Die Metallpigmente können auch flockenförmig, d.h. im wesentlichen plättchenförmig sein. Allerdings werden zu den Metallpigmenten weiter keine Angaben gemacht und sie können nicht in der ganzen beanspruchten Breite tatsächlich in der Elektrotauchlackierung eingesetzt werden.

Aufgabe der vorliegenden Erfindung ist es, einen Metallpigmente enthaltenden anodischen Elektrotauchlack bereit zu stellen, mit dem metallische Elektrotauchlackierungen erhältlich sind. Die Metallpigmente müssen korrosionsstabil gegenüber dem wässrigen Elektrotauchlackmedium sein und sich abscheiden lassen, Der anodische Elektrotauchlack soll eine Badstabilität von mindestens 60 Tagen aufweisen. Damit hergestellten Elektrotauchlacküberzüge sollen einen metallischen Effekt aufweisen, der in seiner optischen Qualität vorzugsweise denjenigen von Pulverlackierungen entspricht.

Weiterhin ist eine Aufgabe der vorliegenden Erfindung ein Verfahren zur Herstellung eines metallpigmenthaltigen Elektrotauchlackes zu finden.

Die Aufgabe wurde durch Bereitstellung eines anodischen Elektrotauchlacks umfassend mindestens ein Bindemittel für anodischen Elektrotauchlack und wässriges Flüssigmedium, gelöst, wobei der anodische Elektrotauchlack zusätzlich mindestens ein mit einem Beschichtungsmittel beschichtetes plättchenförmiges Metallpigment enthält, wobei
(a) das plättchenförmige Metallpigment einen d₅₀-Wert der Summendurchgangsgrößenverteilung von 4 bis 35 µm besitzt und aus der Gruppe, die aus leafing-Metallpigmenten, mit Kunstharzen beschichteten Metallpigmenten und Mischungen davon besteht, ausgewählt ist, wobei die mittels Lasergranulometrie als Kugeläquivalent ermittelte mittiere Längsausdehnung (d₅₀-Wert der Summendurchgangskurve) der plättchenförmigen Metallpigmente mindestens das Zehnfache der mittleren Dicke beträgt, und
(b) das Beschichtungsmittel ein Beschichtungsmittel mit einem organischen Grundgerüst mit mindestens 10 C-Atomen ist, das eine oder mehrere funktionelle Gruppen zur Anhaftung oder Anbindung an die Pigmentoberfläche besitzt, wobei die funktionelle Gruppe aus der Gruppe, die aus Phosphonsäuren, Phosphonsäureester, Phosphorsäuren, Phosphorsäureester, Sulphonat, Polyol und deren Mischungen besteht, ausgewählt ist, und
(c) das Beschichtungsmittel saure Eigenschaften aufweist.

Bevorzugte Weiterbildungen sind in den Unteransprüchen 2 bis 15 angegeben.

Ferner wurde die Aufgabe durch Bereitstellung eines Verfahrens zur Herstellung eines Elektrotauchlackes nach einem der Ansprüche 1 bis 15 gelöst, wobei das Verfahren die in Anspruch 16 spezifizierten Schritte umfaßt:

Die der Erfindung zugrundeliegende Aufgabe wird auch Verwendung eines anodischen Elektrotauchlackes nach einem der Ansprüche 1 bis 15 zur Beschichtung eines elektrisch leitfähigen Untergrundes oder Gegenstandes gelöst.

Die Aufgabe der Erfindung wird ebenfalls durch Bereitstellung eines mit einem anodischen Elektrotauchlack nach einem der Ansprüche 1 bis 15 beschichteten Gegenstandes gelöst. Der Gegenstand wird dabei vorzugsweise aus der Gruppe, die aus Heizungskörper, Tankanlagen, Automobilkarosserien, Automobilzubehörteiten, Haus- und Elektrogeräten, Möbeln, Stahlmöbeln, Bauelementen und Bau- und Landwirtschaftsgeräten besteht, ausgewählt.

Schließlich wird die der Erfindung zugrundliegende Aufgabe durch die Verwendung von plättchenförmigen leafing-Metallpigmenten gemäß Anspruch 19 gelöst.

Bevorzugte Weiterbildungen der erfindungsgemäßen Verwendung sind in den Unteransprüchen 20 und 21 angegeben.

Die der Erfindung zugrundeliegende Aufgabe wird auch durch die Verwendung von plättchenförmigen leafing-Metallpigmenten und/oder mit Kunstharz(en) beschichteten Metallpigmenten gemäß Anspruch 22 gelöst.

Die Metallpigmente können aus Metallen oder Legierungen, die aus der Gruppe, die aus Aluminium, Kupfer, Zink, Messing, Eisen, Titan, Chrom, Nickel, Stahl, Silber und Legierungen davon besteht, ausgewählt werden. Selbstverständlich können auch Gemische der vorgenannten Metallpigmente verwendet werden. Bevorzugt sind im Sinne der Erfindung Aluminiumpigmente sowie Messingpigmente, wobei Aluminiumpigmente besonders bevorzugt sind.

Die Metallpigmente sind Immer plättchenförmiger Natur. Hierunter versteht man Pigmente, bei denen die mittlere Längsausdehnung (d₅₀-Wert der Summendurchgangskurve) mindestens das Zehnfache, bevorzugt mindestens das Zwanzigfache und besonders bevorzugt mindestens das Fünfzigfache der mittleren Dicke beträgt. Im Sinne der Erfindung werden, wenn Metallpigmente erwähnt werden, immer plättchenförmige Metallpigmente gemeint.

Die in dem erfindungsgemäßen Elektrotauchlack verwendeten Metallpigmente besitzen mittlere Längsausdehnungen, die mittels Lasergranulometrie (Cilas 1064, Fa. Cilas) als Kugeläquivalente ermittelt und als d₅₀-Wert der entsprechenden Größensummendurchgangsverteilung dargestellt werden. Diese d₅₀-Werte liegen in einem Bereich von 4 bis 35 µm und besonders bevorzugt von 5 bis 25 µm.
Es wurde überraschend festgestellt, dass sich sehr große Pigmentteilchen mit einem d₅₀-Wert oberhalb von 100 µm praktisch kaum noch abscheiden lassen. Offenbar sind die Migrations- und Abscheidungseigenschaften bei größeren Teilchen erheblich reduziert. Aus derartig groben Pigmentverteilungen werden nur noch die Fraktionen unterhalb von ca. 100 µm abgeschieden (Feinkornanteil). Damit wird jedoch die Größe und Größenverteilung der abgeschiedenen Teilchen im Vergleich zu den eingesetzten erheblich reduziert. Aus diesem Grunde sind kleinere Teilchen bevorzugt. Bei einem d₅₀-Wert in einem Bereich von ca. 4 µm bis 35 µm werden die erfindungsgemäßen Pigmente ohne Probleme in ihrer gesamten Größenverteilung abgeschieden. Zudem ermöglichen Pigmente bei einer Größe von 4 µm bis 35 µm eine Baddauer bzw. -stabilität von mehr als 60 Tagen.

Unterhalb von einem d₅₀ von 4 µm sind die Teilchen zu fein, um einen ansprechenden optischen Effekt zu produzieren. Auch können hier aufgrund der sehr hohen spezifischen Oberfläche der feinen Pigmente gelegentlich Gasungsprobleme im wässrigen Elektrotauchlackmedium auftreten.

Die mittlere Dicke der erfindungsgemäßen Metallpigmente hingegen beträgt 50 bis 5000 nm, bevorzugt 100 bis 800 nm und besonders bevorzugt 250 bis 500 nm.

Elektrotauchlacke sind immer wasserbasierende Systeme. Aus diesem Grunde müssen in einem Elektrotauchlack enthaltene Metallpigmente mit einer Schutzschicht versehen sein, um den korrosiven Einfluß des Wassers auf das Metallpigment zu unterbinden. Zudem müssen sie über geeignete Oberflächenladungen verfügen, um im elektrischen Feld eine ausreichende elektrophoretische Beweglichkeit zu besitzen.

Überraschenderweise werden diese Eigenschaften erfüllt, wenn das piättchenförmige Metallpigment aus der Gruppe, die aus leafing-Metallpigmenten, mit Kunstharzen beschichteten Metallpigmenten und Mischungen davon besteht, ausgewählt ist.
Das Beschichtungsmittel ist ein organisches Beschichtungsmittel mit einem organischen Grundgerüst mit mindestens 10 C-Atomen ist, das eine oder mehrere funktionelle Gruppen zur Anhaftung oder Anbindung an die Pigmentoberfläche besitzt, wobei die funktionelle Gruppe aus der Gruppe, die aus Phosphonsäuren, Phosphonsäureester, Phosphorsäuren, Phosphorsäureester, Sulphonat, Polyol und deren Mischungen besteht, ausgewählt ist, und das Beschichtungsmittel saure Eigenschaften aufweist.

Unter dem Begriff "Bindemittelfunktionalitäten" werden im Sinne der Erfindung funktionelle Gruppen verstanden, die für Bindemittel eines anodischen Tauchlackes charakteristisch sind.

Unter dem Begriff "Anhaftung" werden im Sinne der Erfindung nicht kovalente Wechselwirkungen verstanden, wie z.B. hydrophobe Wechselwirkungen, Wasserstoffbrückenbindungen, ionische Wechselwirkungen, van-der-Waals-Kräfte, etc., die zu einer Immobilisierung des Beschichtungsmittels auf der Pigmentoberfläche führen.

Unter dem Begriff "Anbindung" werden im Sinne der Erfindung kovalente Bindungen verstanden, die zu einer kovalenten Immobilisierung des Beschichtungsmittels auf der Pigmentoberfläche führen.

Unter dem Begriff "saure Eigenschaften" wird im Sinne der Erfindung verstanden, dass das Beschichtungsmittel saure Gruppen, Säuregruppen, negativ ionsierbare Gruppen oder Gruppen mit negativen Ladungen aufweist.

Gemäß einer bevorzugten Weiterbildung der Erfindung sind die Metallpigmente leafing-Metallpigmente und/oder Metallpigmente, die mit einer Kunstharzschicht beschichtet oder überzogen sind, und die mit mindestens einem Beschichtungsmittel behandelt sind, welches für Elektrotauchlacke geeignete Bindemittelfunktionalitäten enthält.

Bei den leafing-Metallpigmenten handelt es sich um Metallpigmente, welche aufgrund einer Unverträglichkeit ihrer oberflächenchemischen Eigenschaften mit dem umgebenden Bindemittel sich an der Oberfläche oder in der Nähe der Oberfläche des Bindemittels anordnen. Es können alle bekannten leafing-Metallpigmente verwendet werden. Bevorzugt handelt es sich um mit, vorzugsweise gesättigten, Fettsäuren mit 10 bis 30 C-Atomen vermahlene und/oder nachpolierte Metallpigmente. Die Fettsäuren können linear oder verzweigt sein. Besonders bevorzugt werden die leafing-Pigmente mit Stearinsäure und/oder Palmitinsäure vermahlen und/oder nachpoliert. Die hierbei verwendete Stearin- bzw. Palmitinsäure sind von technischer Qualität, d.h. sie enthalten geringe Mengen höherer und/oder niedrigerer Fettsäurehomologe.
Weiterhin kann es sich bei leafing-Metallpigmenten um Metallpigmente handeln, die mit Alkylketten enthaltenden Additiven behandelt worden sind.

Beispiele hierfür sind Decylphosphonsäure oder Alkylalkoholphosphorsäureester wie das Produkt FB 7234/S der Fa Zschimmer & Schwarz GmbH & Co (Max-Schwarz-Str. 3-5, D-56112 Lahnstein/Rhein).

Überraschenderweise erhält man mit dem erfindungsgemäßen Elektrotauchlack, der Metallpigmente enthält, die auf einem leafing-Metallpigment basieren, nach der Elektrotauchlackierung ebenfalls eine hochbrillante Metalliclackierung, die ebenfalls einen leafing-Effekt aufweist.

Besonders überraschend ist hier jedoch die Tatsache, das diese leafing-Metallpigmente in der Lackschicht fest eingearbeitet sind und keinen Abrieb zeigen. Dies ist bislang mit leafing-Metallpigmenten, die beispielsweise im Pulverlack eingesetzt werden, nicht möglich.

Die mit Kunstharzen beschichteten Metallpigmente enthalten eine Beschichtung aus Polymeren. Diese Polymere werden ausgehend von Monomeren auf die Metallpigmente polymerisiert. Die Kunstharze umfassen Acrylate, Methacrylate, Ester und/oder Urethane. Bei einer bevorzugten Ausführungsform wird das beschichtete Metallpigment mit mindestens einem Methacrylat und/oder Acrylat beschichtet. Besonders bevorzugt werden Metallpigmente verwendet, die gemäß der Lehre der EP 0 477 433 A1, die hiermit unter Bezugnahme aufgenommen ist, hergestellt wurden. Derartige Pigmente enthalten zwischen dem Metallpigment und der Kunstharzbeschichtung ein organofunktionelles Silan, welches als Haftvermittler dient. Besonders bevorzugt sind hierbei Beschichtungen aus, vorzugsweise mehrfach, vernetzten Acrylaten und/oder Methacrylaten. Derartige Überzüge stellen bereits einen guten Schutz gegenüber dem wässrigen Medium von Elektrotauchlacken dar. Ähnliche Pigmente werden in der DE 36 30 356 C2 beschrieben, wobei hier im Unterschied zwischen dem Metallpigment und der Kunstharzbeschichtung eine ethylenisch ungesättigte Carbonsäure und(oder Phosphorsäure-Mono oder Diester als Haftvermittler angeordnet sind.

Beispiele für derartige Vernetzer sind: Tetraethylenglycoldiacrylat (TEGDA), Triethylenglycoldiacrylat (TIEGDA), Polyethylenglycol-400-diacrylat (PEG400DA), 2,2'-Bis(4-acryloxyethoxyphenyl)-propan, Ethylenglycoldimethacrylat (EGDMA), Diethylenglycoldimethacrylat (DEGDMA), Triethylenglycoldimethacrylat (TRGDMA), Tetraethylenglycoldi-methacrylat (TEGDMA), Butyldiglycolmethacrylat (BDGMA), Trimethylolpropantri-methacrylat (TMPTMA),1,3-Butandioldimethacrylat (1,3-BDDMA), 1,4-Butandioldi-methacrylat (1,4-BDDMA), 1,6-Hexandioldimethacrylat (1,6-HDMA), 1,6-Hexan-dioldiacrylat (1,6-HDDA), 1,12-Dodecandioldimethacrylat (1,12-DDDMA), Neopentyl-glycoldimethacrylat (NPGDMA), Besonders bevorzugt ist Trimethylolpropantrimethacrylat (TMPTMA). Diese Verbindungen sind kommerziell erhältlich bei Elf Atochem Deutschland GmbH, D-40474 Düsseldorf Deutschland oder Rohm & Haas, In der Kron 4, 60489 Frankfurt / Main, Deutschland.

Die Dicke der Kunstharzbeschichtung beträgt vorzugsweise 2 bis 50 nm, weiter bevorzugt 4 bis 30 nm und besonders bevorzugt 5 bis 20 nm. Der Anteil an Kunstharz, jeweils bezogen auf das Gewicht des unbeschichteten Metallpigments ist im einzelnen von der Größe der Metallpigmente abhängig und beträgt vorzugsweise 1 bis 25 Gew.-%, weiter bevorzugt 2 bis 15 Gew.-% und besonders bevorzugt 2,5 bis 10 Gew.-%.

Das Beschichtungsmittel wird nach der Ausbildung der Kunstharzschicht auf die Metallpigmente aufgebracht. Die Kunstharzschicht kann die Pigmente vollkommen umschließen, sie kann jedoch auch nicht ganz geschlossen vorliegen oder Risse aufweisen. Durch Verwendung eines Beschichtungsmittels mit einem organischen Grundgerüst mit mindestens 10 C-Atomen, das eine oder mehrere funktionell Gruppen zur Anhaftung oder Anbindung an die Pigmentoberfläche besitzt, wobei die funktionelle Gruppe aus der Gruppe, die aus Phosphonsäuren, Phosphonsäureester, Phosphorsäuren, Phosphorsäureester, Sulphonat, Polyol und deren Mischungen besteht, ausgewählt ist, werden mögliche Korrosionsstellen, die durch derartige Risse oder durch eine nicht vollständige Beschichtung an dem Metallpigment hervorgerufen werden können, verhindert. Das Beschichtungsmittel, insbesondere wenn es an die metallische Pigmentoberfläche anbindet, vermag in derartige Lücken oder Risse in der Kunstharzbeschichtung einzudringen und somit die erforderliche Korrosionsstabilität zu bewirken. Lediglich mit Kunstharzbeschichtete Metallpigmente, die ohne Beschichtungsmittel behandelt werden, sind in der anodischen Elektrotauchlackierung nicht wirksam.

Bei einer Elektrotauchlackierung werden einem Elektrotauchlack zugesetzte konventionelle Farbpigmente auf dem Werkstück durch einen eher zufälligen Prozeß abgeschieden. Der Elektrotauchlack wird hier stets während der Abscheidung heftig gerührt. Dadurch findet im wesentlichen der Stofftransport zum Werkstück statt (Konvektion). Erst innerhalb der sich ausbildenden Nernstschen Diffusionsschicht erfolgt eine elektrophoretische Wanderung der geladenen Bindemittelteilchen im elektrischen Feld. Die Konzentration der Farbpigmente im Abscheidebad ist sehr hoch (ca. 10 Gew.-%). Durch das sich abscheidende Bindemittel werden die Farbpigmente mitgerissen. Eine elektrophoretische Wanderung der Farbpigmente im elektrischen Feld erfolgt nicht.

Metallpigmente sind per se nicht in Elektrotauchlacken einsetzbar. Selbst wenn sie durch eine geeignete Schutzschicht, wie beispielsweise einem Metalloxid oder einem Kunstharz, korrosionsstabil gegenüber dem wässrigen Medium des Elektrotauchlackes sind, werden sie entweder gar nicht abgeschieden oder nach einer anfänglichen Abscheidung nach wenigen Stunden bis Tagen nicht mehr abgeschieden (mangelnde Badstabilität).

Es wurde nun überraschenderweise gefunden, dass der erfindungsgemäße Elektrotauchlack, der Metallpigmente, die mit dem oben beschriebenen Beschichtungsmittel beschichtet sind, enthält, eine Badstabilität von mehr als 60 Tagen aufweist. Die in dem erfindungsgemäßen anodischen Elektrotauchlack enthaltenen Metallpigmente werden mithin auch noch nach 60 Tagen, bevorzugt nach 90 Tagen zuverlässig auf dem Werkstück abgeschieden.
Die Metallpigmente müssen vor ihrer Einarbeitung in den Elektrotauchlack mit dem oben beschriebenen Beschichtungsmittel belegt werden.

Das Beschichtungsmittel weist ein organisches Grundgerüst mit wenigstens 10 C-Atomen und eine oder mehrere funktionelle Gruppen zur Anhaftung und/oder zur Anbindung an die Pigmentoberfläche, wobei die funktionellen Gruppen aus der Gruppe bestehend aus Phosphonsäuren, Phosphonsäureester, Phosphorsäuren, Phosphorsäureester, Sulphonate, Polyole und deren Mischungen, ausgewählt ist, wobei das Beschichtungsmittel ferner saure Eigenschaften aufweist.

Unter dem organischen Grundgerüst wird im Sinne der Erfindung ein Monomer oder Polymer verstanden, das mit der funktionellen Gruppe verbunden ist. Beispielsweise ist bei der Decylphosphonsäure das organische Grundgerüst die "Decyl"-Gruppe.

Das Beschichtungsmittel der Metallpigmente weist vorzugsweise eine Säurezahl von 15 bis 300 mg KOH/g Beschichtungsmittel auf. Die hierfür notwendigen sauren Gruppen können von den funktionellen Gruppen stammen, die eine Anhaftung oder Anbindung an die Pigmentoberfläche bewirken oder bewirken können.

Bevorzugt hat das Beschichtungsmittel eine Säurezahl von 17 bis 150 mg KOH/g Beschichtungsmittel und besonders bevorzugt von 20 bis 100 mg KOH/g Beschichtungsmittel.

Beschichtungsmittel mit einer Säurezahl von unter 15 mg KOH/g Beschichtungsmittel haben sich als nicht geeignet erwiesen.
Die Säurezahl des Beschichtungsmittels kann gemäß der Norm DIN EN ISO 3682 bestimmt werden.

Diese sauren Gruppen verleihen dem Elektrotauchlackpigment vermutlich genügend negative Oberflächenladungen, um einerseits im überwiegend wässrigen Medium des Elektrotauchlackes gut dispergiert zu werden und andererseits unter den Bedingungen einer anodischen Tauchlackierung im elektrischen Feld elektrophoretisch wandern zu können, was auch als Migration bezeichnet werden kann, um schließlich innerhalb der Nernstschen Diffusionsschicht vor der Anode mittels des oben erläuterten Mechanismus am Abscheidemechanismus teilnehmen zu können.

Das Beschichtungsmittel kann Funktionalitäten aufweisen, die den Bindemittelfunktionalitäten des für den jeweiligen Elektrotauchlack verwendeten Bindemittels oder der Bindemittel entsprechen. Die Bindemittelfunktionalitäten des Bindemittels und die Bindemittelfunktionalitäten des Beschichtungsmittels können auch voneinander verschieden sein.

Weiterhin ist bevorzugt, daß auch die an der Pigmentoberfläche anhaftenden oder anbindenden funktionellen Gruppen sauer bzw. negativ geladen sind. Auf diese Weise wird die Oberfläche der Metallpigmente chemisch den Bindemitteln des erfindungsgemäßen Elektrotauchlackes angepasst und damit ermöglicht, dass die Metallpigmente im elektrischen Feld elektrophoretisch wandern und somit am Abscheidemechanismus der Elektrotauchlacke teilnehmen.

Vorzugsweise ist das zur Beschichtung der Metalleffektpigmente in dem erfindungsgemäßen Elektrotauchlack verwendete Beschichtungsmittel anodisch abscheidbar.

Das Beschichtungsmittel besitzt funktionelle Gruppen, die an der Pigmentoberfläche, d.h. der Metallpigmentoberfläche oder der mit Kunstharz beschichteten Metalloberfläche anhaften und/oder anbinden. Auf diese Weise kann das oder können die Beschichtungsmittel zuverlässig und im ausreichenden Maße auf den Metallpigmenten verankert werden.

Derartige funktionelle Gruppen sind Phosphonsäuren, Phosphonsäureester, Phosphorsäuren, Phosphorsäureester, Sulphonate und/oder Polyole. Bei den Phosphonsäureester bzw. Phosphorsäureester kann es sich auch um teilveresterte Systeme handeln.

Gemäß einer bevorzugten Ausführungsform ist das Beschichtungsmittel ein Phosphorsäureester der Formel (I) oder ein Phosphonsäureester der Formel (II): 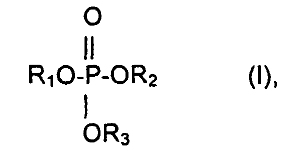 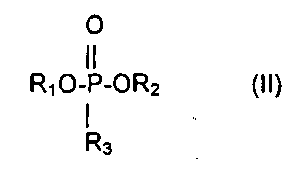 wobei R₁, R₂ und R₃ unabhängig voneinander
- Alkyl mit 10 bis 20 C-Atomen, die geradkettig oder verzweigtkettig und optional mit Fluor und/oder Hydroxyl substituiert sein können,
- Aryl mit 6 bis 24 C-Atomen, die mit Alkyl mit 1 bis 6 C-Atomen, Fluor und/oder Hydroxyl substituiert sein können, wobei die Gesamtzahl an C-Atomen wenigstens 10 beträgt,
sind, wobei R₁ und R₂ unabhängig voneinander auch Wasserstoff sein können.

Als Beschichtungsmittel können auch Polyole verwendet werden. Unter Polyol wird im Sinne der Erfindung eine Verbindung mit mindestens 4 OH-Gruppen verstanden. Die Hydroxylzahl der Polyole beträgt 10 bis 160 mg KOH/g Beschichtungsmittel. Diese funktionellen Gruppen unterstützen die Wasserlöslichkeit des mit dem Beschichtungsmittel versehenen Metallpigmentes.

Das organische Grundgerüst des Beschichtungsmittels besitzt vorzugsweise 10 bis 800, vorzugsweise 12 bis 100, weiter bevorzugt 20 bis 30 C-Atome. Gemäß einer bevorzugten Weiterbildung der Erfindung ist das organische Grundgerüst ein Oligomer oder ein Polymer.

Bei einer bevorzugten erfindungsgemäßen Ausführungsform wird das organisch Grundgerüst des Beschichtungsmittels aus der Gruppe bestehend aus Alkyl, Alkenyl, Alkinyl, Aryl, Alkylaryl, Arylalkyl, Alkenylaryl, Arylalkinyl, Alkinylaryl, Cycloalkyl, Alkylcycloalkyl, Cycloalkylalkyl, perfluoriertem Alkyl, teilfluoriertem Alkyl, perfluoriertem Aryl, teilfluoriertem Aryl, perfluoriertem Alkylaryl- und teilfluoriertem Alkylaryl sowie deren Kombinationen und/oder Mischungen, ausgewählt.

Besonders bevorzugt handelt es sich beim Beschichtungsmittel um Phosphonsäureester und/oder Phosphorsäureester mit ein oder zwei veresterten Gruppen.

Vorzugsweise handelt es sich bei dem Beschichtungsmittel um ein Gemisch von Phosphorsäuremonoalkyl- und Phosphorsäuredialkylestern. Vorzugsweise handelt es bei den Alkylgruppen jeweils um verzweigte Alkylgruppen. Als sehr geeignet haben sich verzweigte Alkylketten mit einer Kettenlänge von 10 C- bis 18 C-Atomen, vorzugsweise von 12 C- bis 15 C-Atomen, beispielsweise Isotridecyl, erwiesen.

Beispielsweise kann ein Gemisch von Phosphorsäuremono- und diisotridecylester verwendet werden, wie es beispielsweise unter der Bezeichning Hordaphos^{®} MDIT von der Fa. Clariant GmbH (Am Unispark 1, D-65843 Sulzbach am Taunus) vertrieben wird.

Das Beschichtungsmittel kann von seiner chemischen Natur her ein Additiv oder auch ein Bindemittel sein. Die Bindemittelfunktionalitäten können beispielsweise Epoxy-, Carboxy-, Acrylat-, Methacrylat- und/oder Estergruppe sein. Es ist bevorzugt, daß das Beschichtungsmittel wenigstens drei, beispielsweise vier, fünf, sechs oder mehr Bindemittelfunktionalitäten, die gleich oder voneinander verschieden sein können, aufweist. Die Bindemittelfunktionalitäten können auch aus der Gruppe, die aus Polyepoxiden, Epoxidharzester, modifizierten Polyepoxiden, Siliconharzen, Polyestern, Polyacrylaten, Polymethacrylaten, Polyacrylat/methacrylaten, Melaminharzen, Maleinaten, Maleinatölen, maleinisierten Polybutadienharzen und Mischungen davon besteht, ausgewählt sein.

Die Funktionalitäten können auch auspolymerisierte Einheiten beinhalten, jedoch auch aus den monomeren Einheiten bestehen. Bevorzugt jedoch sind die Bindemittelfunktionalitäten bereits polymerisiert oder oligomerisiert. So können beispielsweise Polyester eingesetzt werden. Diese enthalten jedoch für anodische Tauchlacke vorzugsweise nicht veresterte Carboxylgruppen.

Weiterhin kann das Beschichtungsmittel beispielsweise auspolymerisierte Epoxideinheiten besitzen.

Vorzugsweise wird die Oberfläche der Metallpigmente mithin chemisch den im Elektrotauchlack verwendeten Bindemitteln angepasst. Die im erfindungsgemäßen anodischen Elektrotauchlack enthaltenen Metallpigmente können somit im elektrischen Feld elektrophoretisch wandern und werden wie die Bindemittelkomponenten des anodischen Elektrotauchlackes anodisch abgeschieden.

Derart funktionalisierte Beschichtungsmittel tragen überraschenderweise zur Korrosionsstabilität der Metallpigmente im wässrigen Elektrotauchlack bei. So kann auch überraschenderweise die Gasung (Wasserstoffentwicklung) von leafing-Aluminiumpigmenten wirksam unterdrückt werden.

Für die anodische Tauchlackierung können bevorzugt als derartige Beschichtungsmittel modifizierte Esterharze verwendet werden. Besonders bevorzugt werden modifizierte Polyesterharze verwendet. Ein Beispiel ist das Produkt Setal L 6306 SS-60 (Fa. Akzo Nobel). Hier handelt es sich um einen Carboxyfunktionalisierten Polyester mit einer Säurezahl von 20 mg KOH/g und einer Hydroxidzahl von 2,7.

Weiterhin bevorzugt werden als Beschichtungsmittel für die in dem erfindungsgemäßen anodischen Tauchlack verwendeten Metallpigmente modifizierte Epoxidharze und/oder Acrylatharze verwendet. Bevorzugt sind Epoxidharze, die mit Phosphorsäurederivate, Phosphorsäureesterderivaten, Phosphonsäurederivaten und/oder Phosphonsäureesterderivaten oder deren Mischungen modifiziert sind. Derartige Funktionen besitzen offenbar eine ausreichende negative Ladung und bewirken zudem - insbesondere bei Aluminiumpigmenten - eine Verbesserung der Gasungsstabilität. Als sehr geeignete Beschichtungsmittel der Epoxidharz- und/oder Acrylatharz-modifizierten Phosphorsäureester haben sich Produkte der Resydrolreihe (Fa. Akzo Nobel, bzw. Cytec, Graz, Österreich) erwiesen.

Die Beschichtungsmittel werden vorzugsweise in Mengen von 1 bis 200 Gew.-% bezogen auf das Gewicht des unbeschichteten Metallpigments eingesetzt. Unterhalb von 1 % ist die Wirkung zu gering und die Metallpigmente werden insbesondere nach 60 Tagen Baddauer nicht mehr zuverlässig abgeschieden. Oberhalb von 200 Gew.-% wird unnötig viel Beschichtungsmittel verwendet. Entsprechend viele Metallpigmente müssen in den Elektrotauchlack eingebracht werden. Überschüssiges Beschichtungsmittel können in diesem Fall die Eigenschaften des Elektrotauchlackes negativ beeinflussen. Bevorzugt werden die Beschichtungsmittel in Mengen von 10 bis 150 Gew.-% und besonders bevorzugt von 20 bis 100 Gew.-%, weiter bevorzugt von 30 bis 70 Gew.-%, jeweils bezogen auf das Gewicht des unbeschichteten Metallpigments, eingesetzt. Diese Angaben beziehen sich jeweils auf das Beschichtungsmittel selbst und nicht auf möglicherweise vorhandenes Lösemittel, in dem das Beschichtungsmittel in seiner kommerziell erhältlichen Darreichungsform angeboten wird.

Das Beschichtungsmittel kann, muß jedoch nicht die Metallpigmente vollständig umhüllen.

Bei einer weiteren Ausführungsform der Erfindung werden als Beschichtungsmittel für die Metallpigmente jene Bindemittel, die als Bindemittel bei der anodischen Elektrotauchlackierung verwendet werden, verwendet. Die Bindemittel müssen in diesem Fall jedoch über die oben genannten funktionellen Gruppen verfügen, um in geeigneter.Weise fest auf dem Effektpigment anzuhaften oder anzubinden, da anderenfalls eine Delaminierung und letztendlich Ablösung vom Metallpigment im wässrigen Tauchlack erfolgen kann. Eine derartige Anbindung kann auch gegebenenfalls durch weitere geeignete Haftvermittler wie beispielsweise organofunktionelle Silane oder modifizierte Bindemittel, die mit Haftgruppen für das Effektpigment versehen sind, erfolgen.

Für anodische Elektrotauchlacke geeignete Bindemittel haben Säurezahlen von vorzugsweise 15 bis 300 mg KOH/g, bevorzugt von 25 bis 160 mg KOH/g, Bindemittel, weiter bevorzugt von 50 bis 130 mg KOH/Bindemittel. Vorzugsweise weisen diese Bindemittel weiterhin eine Hydroxylzahl von 0 bis 160 mg KOH/g Bindemittel, bevorzugt von 30 bis 100 mg KOH/g Bindemittel auf.

Für anodische Tauchlacke sind beispielsweise folgende Harze geeignet: Polyacrylat-, Polymethacrylat-, Polyester-, Polyurethanharze, Epoxidharze, Epoxidharzester, modifizierte Epoxide und Siliconharze. Weiterhin sind Kombinationen dieser Funktionalitäten wie z.B. urethanisierte Polyesterharze, acrylierte Polyester- oder Polyurethanharze, Polyol modifizierte Polyester, Maleinatöle oder maleinisierte Polybutadienharze geeignet.
Zur Anbindung von Metallpigment und Beschichtungsmittel können organofunktionelle Silane der Formel R_{z}Si(OR')_{(4-z)} verwendet werden. Hierbei ist R eine organofunktionelle Gruppe, R' eine Alkylgruppe mit 1 bis 6 C-Atomen und z eine ganze Zahl von 1 bis 3.

Bevorzugt ist R' Ethyl oder Methyl und R enthält bevorzugt als funktionale Gruppen Acrylat-, Methacrylat-, Vinyl-, Isocyanato-, Hydroxy-, Carboxy-, Thiol-, Cyano- oder Ureidogruppen.

Derartige Silane sind kommerziell verfügbar. Beispielsweise sind dies viele Vertreter der von der Fa. Degussa, Rheinfelden, Deutschland hergestellten und unter dem Handelsnamen "Dynasylan®" vertriebenen Produkte bzw. der von der Fa. OSi Specialties produzierten Silquest®-Silane oder der Fa. Wacker, Burghausen, Deutschland produzierten GENOSIL®-Silane.

Beispiele hierfür sind 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), 3-Mercaptopropyltri(m)ethoxysilan (Dynasylan MTMO oder 3201; Silquest A-189), 3-Glycidoxypropyltrimethoxysilan (Dynasylan GLYMO, Silquest A-187), tris-(3-Trimethoxysilylpropyl)isocyanurat (Silquest Y-11597), gamma-Mercaptopropyltrimethoxysilan (Silquest A-189), Bis-(3-Triethoxysilylpropyl)polysulfi (Silquest A-1289), Bis-(3-Triethoxysilyl)disulfid (Silquest A-1589), beta-(3,4-Epoxycyclohexyl)ethyltrimethoxysilan (Silquest A-186), gamma-Isocyanatopropyltrimethoxysilan (Silquest A-Link 35, Genosil GF40), (Methacryloxymethyl)trimethoxysilan (Genosil XL 33), Isocyanatomethyl)trimethoxysilan (Genosil XL 43)

Die funktionellen Gruppen des Silans müssen mit chemisch komplementären Gruppen des Beschichtungsmittels zur Reaktion gebracht werden, um das organofunktionelle Silan kovalent mit dem Beschichtungsmittel zu verbinden.

Die mit dem oben angegebenen Beschichtungsmittel beschichteten plättchenförmigen Metallpigmente liegen in relativ geringen Konzentrationen im Elektrotauchlack vor. Die Konzentration beträgt vorzugsweise 0,5 bis 5 Gew.-%, bevorzugt 1 bis 4 Gew.-% und besonders bevorzugt 1,5 bis 3 Gew.-%, jeweils bezogen auf das Gewicht des gesamten Lackes.

Bei zu hohen Konzentrationen können sich die Metallpigmente leicht am Boden absetzen und bei zu niedrigen Konzentrationen kann die Abscheiderate zu gering sein, um genügend Metallpigmente innerhalb der üblichen Abscheidedauer während der Elektrotauchlackierung für eine deckende Volltonlackierung auf das Werkstück zu bringen.

Als Bindemittel kann der erfindungsgemäße Elektrotauchlack alle gängigen Bindemittel enthalten. Beispiele hierfür sind die schon oben stehend genannten Bindemittel, die auch als Funktionalitäten der Additive eingesetzt werden können. Die Bindemittel sind vorzugsweise in Mengen von 5 bis 15 Gew.-% bezogen auf das Gewicht des gesamten Elektrotauchlacks, in dem erfindungsgemäßen Elektrotauchlack enthalten. Bevorzugt sind die Bindemittel in Mengen von 6 bis 12 Gew.-% und besonders bevorzugt von 7 bis 10 Gew.-% im Elektrotauchlack enthalten.

Die Bindemittel stellen Polyelektrolyte dar. Bindemittel für anodische Elektrotauchlacke enthalten beispielsweise Carboxyl-, Hydroxy- oder Carboamidfunktionen. Diese in ihrer neutralen Form relativ unpolaren Funktionen werden durch Basen neutralisiert und sind daher aufgrund der ionischen Struktur der Salze relativ polar. Hierdurch sind die Bindemittel kolloidal löslich. Als Basen zur Neutralisation werden beispielsweise Alkalihydroxide wie Lithiumhydroxyd oder Kaliumhydroxyd oder Amine wie Triethanolamin, Triethylamin, Diethanolamin, Diethylamin, verwendet. Die Menge des zugegebenen Amins hängt ab von Menge und Anzahl der ionogenen zu neutralisierenden Gruppen des Bindemittels und des verwendeten Metallpigmentes.

Das Wasser des Elektrotauchlackes ist üblicherweise destilliertes oder vollentsalztes Wasser, da vorhandene Ionen auch in geringen Konzentrationen die Löslichkeit der Bindemittel beeinträchtigen können.

Weiterhin können die erfindungsgemäßen Elektrotauchlacke in geringen Mengen auch organische Lösungsmittel als Lösungsvermittler enthalten. Durch Zusatz organischer Lösemittel werden auch nach der Abscheidung Lackfilme besserer Qualität erreicht. Hier kommen beispielsweise Glycolether wie Butylglycol oder Ethylglycol, Alkohole wie Butanol sowie höhere Alkohole wie Decanol oder Tridecylalkohol in Frage.

Diese organischen Lösungsmittel sind vorzugsweise in Mengen von 1 bis zu 6 Gew.-%, bevorzugt von 1,5 bis zu 5 Gew.-%, jeweils bezogen auf das Gesamtgewicht des Lackes, im Elektrotauchlack vorhanden. Größere Mengen an organischem Lösungsmittel können zur Abnahme des Filmwiderstandes und damit zu weniger gleichmäßigen Schichtdicken auf dem zu beschichtenden Werkstück führen.

Des weiteren können die erfindungsgemäßen Elektrotauchlacke übliche anorganische und/oder organische Farbpigmente, Füllstoffe, Korrosionsinhibitoren und Additive wie beispielsweise Dispergierhilfsmittel, Antiabsetzmittel oder Entschäumer enthalten. Diese dürfen mit Wasser im schwach basischen bis neutralen Bereich nicht reagieren und insbesondere keine störenden Fremdionen einbringen.

Beispiele für geeignete Füllstoffe sind Talkum, Siliciumdioxid, Aluminiumhydroxid, Aluminiumsilikate, Glimmer, Kieselsäuren, Calciumcarbonat und Bariumsulfat. Die Füllstoffe können unbeschichtet oder mit organischen Verbindungen beschichtet vorliegen.

Des weiteren können die erfindungsgemäßen Elektrotauchlacke konventionelle organische und/oder anorganische Pigmente enthalten. Die hierbei verwendeten Pigmente sind nicht basischer Natur. Andernfalls würden durch Salzbildung mit den entsprechenden Bindemitteln sofort störende Metallsalze gebildet werden.

Beispiele für farbgebende anorganische Pigmente sind: Bleicarbonat, Bleisulfat, Eisenoxide, Zinnoxid, Antimonoxid, Chromorange, Chromgelb, Nickeltitangelb, Molybdatrot, Mineralviolett, Ultramarinviolett, Ultramarinblau, Kobaltblau, Chromoxidgrün, Titandioxid, mikronisiertes Titandioxid, Zinksulfid, Lithopone, und Ruß.

Beispiele für farbgebende organische Pigmente sind: Azopigmente, Phthalocyanin-, Chinacridon-, Anthrachinon-, Thioindigo-, Perylen-, Perinon- und Diketopyrrolopyrrolpigmente.

Die vorgenannten Pigmente können einzeln oder in beliebigen Kombinationen dem erfindungsgemäßen anodischen Elektrotauchlack zugesetzt werden.

Weiterhin können die erfindungsgemäßen Elektrotauchlacke übliche Reaktivverdünner und Co-härter enthalten.

Weiterhin können die erfindungsgemäßen Elektrotauchlacke übliche Lackhilfsstoffe wie Biozide, Lichtschutzmittel oder Verlaufsmittel enthalten.

Die erfindungsgemäßen anodischen Elektrotauchlacke enthalten vorzugsweise einen Feststoffgehalt von 7 bis 40 Gew.-%, bevorzugt von 8 bis 18 Gew.-%, und besonders bevorzugt 9 bis 16 Gew.-%, jeweils bezogen auf das Gesamtgewicht des Elektrotauchlackes.

Das erfindungsgemäße Verfahren zur Herstellung des erfindungsgemäßen Elektrotauchlackes umfaßt die folgenden Schritte:
a) Beschichten des Metallpigmentes mit dem Beschichtungsmittel
b) Vermischen des unter a) erhaltenen beschichteten Metallpigmentes mit mindestens einem organischen Lösemittel oder Lösemittelgemisch und optional mit mindestens einem Bindemittel des Elektrotauchlackes unter Erhalt eines Metallpigmentaufschlusses,
c) Vermischen des unter b) erhaltenen Metallpigmentaufschlusses mit einer wässrigen Dispersion von weiterem und/oder wenigstens einem anderen Bindemittel des Elektrotauchlackes,
d) Zugeben von weiterem Wasser mindestens bis zum Erhalt einer dünnflüssigen Konsistenz,
e) Zugeben von Base in Schritt c) oder d) bis zum gewünschten pH-Wert.

### Beschichtung des Metallpigmentes mit einem Beschichtungsmittel

Die Beschichtung des Metallpigmentes mit einem Beschichtungsmittel kann auf vielerlei Wege vonstatten gehen. Das Metallpigment kann beispielsweise in einem Mischer oder Kneter in Form einer Paste vorgelegt werden. Anschließend gibt man das Beschichtungsmittel hinzu und lässt dieses für mindestens 5 min auf das Metallpigment einwirken. Das Beschichtungsmittel wird bevorzugt in Form einer Lösung oder Dispersion zugegeben. Hierbei kann es sich um eine wässrige Lösung oder um eine überwiegend organische Lösung handeln.

Weiterhin kann das Metallpigment zunächst in einem Lösungsmittel dispergiert werden. Unter Rühren gibt man anschließend das Beschichtungsmittel hinzu. Hierbei sollte bevorzugt das Lösungsmittel, in dem das Beschichtungsmittel gelöst ist, mischbar sein mit jenem, in dem das Metallpigment dispergiert ist. Bei Bedarf können höhere Temperaturen (bis zum Siedepunkt des Lösemittel(gemisches)) eingestellt werden, meist reicht jedoch Raumtemperatur aus, um das Beschichtungsmittel wirksam auf das Metallpigment aufzuziehen.

Danach wird das Pigment vom Lösungsmittel befreit und entweder zum Pulver getrocknet und/oder ggfs. in einem anderen Lösungsmittel angepastet. Als Lösemittel kommen bevorzugt Wasser, Alkohole wie beispielsweise Ethanol, Isopropanol, n-Butanol oder Glycole wie beispielsweise Butylglycol in Frage. Das Lösemittel sollte mit Wasser vermischbar sein. Das erfindungsgemäße Pigment kommt als Paste oder Pulver in den Handel. Die Pasten haben einen nicht flüchtigen Anteil von 30 bis 70 Gew.-%, bezogen auf die gesamte Paste. Bevorzugt besitzt die Paste einen nicht flüchtigen Anteil von 40 bis 60 Gew.-% und besonders bevorzugt von 45 bis 55 Gew.-%, jeweils bezogen auf das Gesamtgewicht der Paste.

Bei einer besonderen erfindungsgemäßen Ausführungsform entspricht das Beschichtungsmittel bei Schritt a) mindestens einem Bindemittel des Elektrotauchlackes.

Für diese Ausführungsform, bei der das Beschichtungsmittel identisch ist mit einem im Elektrotauchlack verwendeten Bindemittel, bietet sich als besonderes Verfahren folgende Variante umfassend folgende Schritte:
a) Herstellen einer Lösung oder Dispersion eines für Elektrotauchlacke geeigneten Bindemittels in einem organischen Lösemittel,
b) Beschichten des Metallpigmentes mit dem Bindemittel durch
   i) Dispergieren des Metallpigmentes in der Lösung oder Dispersion von a) und anschließendem Versprühen
      oder
   ii) Versprühen der Lösung oder Dispersion aus a) auf in einem Gasstrom verwirbelte Metallpigmente,
c) Trocknen der mit Bindemittel beschichteten Metallpigmente in einem bewegten Gasstrom,
d) Ggfs. Anpasten des Pigmentes in Wasser und/oder einem organischem Lösemittel,
e) ggfs. Neutralisieren mit einer Base.

Bevorzugt erfolgt hierbei das Versprühen und Trocknen in einem Sprühtrockner. Dabei werden bevorzugt leicht flüchtige Lösemittel wie beispielsweise Aceton und/oder Ethylacetat verwendet.

### Vermischen des Metallpigmentes mit einem Lösemittel und optional mit mindestens einem Bindemittel des Elektrotauchlackes ("Aufschließen")

In diesem Schritt werden die Metallpigmente aufgeschlossen. Sie werden in einem Lösemittel dispergiert und vorzugsweise mit einem Teil des Bindemittels des Elektrotauchlackes vermischt. Das Verhältnis des hierbei zugesetzten Bindemittels zum Metallpigment beträgt hierbei vorzugsweise 5:1 bis 1:5 und bevorzugt 2:1 bis 1:2. Durch diesen Schritt werden die Metallpigmente gut dispergiert und mit dem Bindemittel vorbenetzt.

Es können gegebenenfalls weitere Hilfsstoffe wie z.B. Netzmittel oder Wachse zugegeben werden.

### c) Vermischen des Metallpigmentaufschlusses mit Bindemittel und Wasser ("Auflacken")

Es wird eine wässrige Bindemitteldispersion vorgelegt. Dieses Bindemittel kann gleich oder verschieden von jenem unter b) verwendeten Bindemittel sein.

Anschließend wird, vorzugsweise unter Rühren, der Metallpigmentaufschluß von b) zur wässrigen Bindemitteldispersion hinzugegeben.

### d) Zugabe von Wasser und Neutralisieren ("Aufstellen")

Zu der unter c) aufgelackten Metallpigment/Bindemitteldispersion wird, vorzugsweise unter Rühren, Wasser in einer vollentsalzten Qualität hinzugegeben. Die Menge des zugegebenen Wassers beträgt hierbei 25 Gew.-% bis 50 Gew.-% des Gesamtgewichts der Metallpigment/Bindemitteldispersion.

Anschließend wird durch Zugabe einer Base ein pH-Wert von vorzugsweise 7,3 bis 8,7, bevorzugt von 7,5 bis 8,5 und besonders bevorzugt von 7,8 bis 8,3 eingestellt. Hierdurch wird das Bindemittel und auch das mit Beschichtungsmittel beschichtete Metallpigment weitgehend neutralisiert und damit in eine Salzform überführt. Anschließend wird, vorzugsweise unter Rühren, weiteres Wasser solange zugegeben, bis der bis dahin relativ dickflüssige Lack eine dünnflüssige Konsistenz annimmt. Man spricht hierbei auch vom Brechen des Wasserberges. Anschließend wird weiteres Wasser hinzugegeben und der Festkörpergehält des Elektrotauchlackes auf 7 bis 40 Gew.-%, bezogen auf das Gesamtgewichts des Lackes, eingestellt. Gewünschtenfalls kann weiter Wasser hinzugefügt werden, um den gewünschten Festkörpergehalt einzustellen.

Die Zugabe von Base bzw. die Neutralisation kann auch nach dem Vermischen des Metallpigmentaufschlusses mit der wässrigen Bindemitteldispersion ("Auflacken") erfolgen.

Zur Neutralisation des Elektrotauchlackes eigenen sich übliche Basen. Beispiele hierfür sind: NaOH, KOH, Ammoniak, LiOH, Amine wie Diethylamin, Triethylamin, Morpholin, Ethylendiamin oder Alkanolamine wie Dimethylaminoethanol, Dimethylamino-2-methylpropanol oder Trimethylethanolamin oder Mischungen verschiedener Basen. Es sollte soviel Base verwendet werden, dass mindestens 25 mol-%, bevorzugt 40 mol-% der sauren Gruppen des mit dem Beschichtungsmittel belegten Metallpigmentes in neutraler Form vorliegt. Hierbei werden als saure Gruppen auch Funktionalitäten, die vom Metallpigment selbst stammen können, gezählt. Dies können beispielsweise Acrylsäurefunktionen im Fall eines mit Kunstharzen beschichten Metallpigmentes oder Stearinsäure im Fall von leafing-Metallpigmenten als Ausgangspigmente sein.

Der pH-Wert des Elektrotauchlackbades liegt bei 25°C vorzugsweise bei pH = 7,8 bis 8,3. Bedingt durch den Herstellungsprozeß des Elektrotauchlacks kann dieser jedoch Schwankungen unterliegen und muß eventuell vor dem elektrochemischen Abscheidevorgang erneut eingestellt werden.

Der erfindungsgemäße Elektrotauchlack wird verwendet zur Beschichtung eines leitfähigen Untergrundes, um einen dekorativen Metalliceffekt zu erhalten.

Der leitfähige Untergrund kann folgende Gegenstände umfassen: Heizungskörper, Tankanlagen, Automobilkarosserien, Automobilzubehörteilen, Haus- und Elektrogeräten, Stahlmöbeln, Bauelementen und Bau- und Landwirtschaftsgeräten.

Die folgenden Beispiele erläutern die Erfindung näher, ohne sie jedoch einzuschränken.

### Erfindungsgemäßes Beispiel 1:

### Beschichten des Metallpigmentes:

80 g einer Paste aus 9 g PCA 214 (mit organischen Polymeren beschichtetes Aluminiumpigment mit d₅₀ = 32 µm; Fa. Eckart GmbH & Co.KG) werden mit 80 g Butylglycol zu einer homogenen Pigmentpaste vermischt. Anschließend werden 40 g SETAL 6306 SS-60 (Polyol modifizierter Polyester; Fa. Akzo Nobel P.O. Box 79, 4600 AB Bergen op Zoom, Niederlande) unter Rühren hinzugegeben. Diese Pigmentpaste wird über Nacht stehen gelassen.

### Herstellung des Elektrotauchlackes:

26 g der Metallpigmentpaste werden mit 26 g eines Acrylatharzes (Fa. Emil Frei GmbH & Co. Lackfabrik - Am Bahnhof 6 - D-78199 Bräunlingen) in 26 g Butylglycol vermischt. Diese Pigmentpaste wird über Nacht stehen gelassen.

Anschließend wird die Pigmentpaste zu 230 g eines bereits fertig gemischten, handelsüblichen anodischen Tauchlacks auf Acrylat- und Melaminharzbasis unter schonendem Rühren mittels einer Dissolverscheibe bei 800 U/min vermischt und weitere 36 g VE-Wasser (vollentsalztes Wasser) hinzugegeben.
Zu dieser Dispersion werden unter Rühren 3,5 g Dimethanolamin in 170 g VE-Wasser hinzugegeben. Nach weiteren 10 min Rühren wurde unter ständigem Rühren gerade soviel destilliertes Wasser zugegeben, bis der sog. "Wasserberg" bricht, und der Lack ein dünnflüssiges Erscheinungsbild aufweist (ca. 620 g VE-Wasser).

Der nach dieser Rezeptur verwendungsgemäß hergestellte Tauchlack für die anodische Tauchlackierung, zeichnet sich durch eine Viskosität von 9 ± 1 Sekunden, bei einer Temperatur von 20°C, gemessen im DIN 4 Auslaufbecher, aus. Der Lösungsmittelanteil des Bades beträgt 3,0 Gew.-%. Der Elektrotauchlack besitzt einen Festkörpergehalt von 12 ± 0,1%. Der gemessene pH-Wert des Elektrotauchlackbades liegt bei 25°C bei pH = 8,2. Der Gehalt an Aluminiumpigment im Tauchlack beträgt ca. 1 Gew.-%.

### Erfindungsgemäßes Beispiel 2:

Die Herstellung des anodischen Tauchlackes erfolgt wie in Beispiel 1, jedoch mit einem Aluminiumeffektpigment mittlerer Teilchengröße D₅₀ = 18 µm, PCA 9155 (Fa. Eckart GmbH & Co. KG).

### Erfindungsgemäßes Beispiel 3:

Die Herstellung des anodischen Tauchlackes erfolgt wie in Beispiel 1, jedoch mit einem leafing Aluminiumeffektpigment mittlerer Teilchengröße D₅₀ = 18 µm VP 53 976 (Fa. Eckart GmbH & Co. KG).

### Erfindungsgemäßes Beispiel 4:

80 g einer Paste aus 9 g PCA 214 (mit organischen Polymeren beschichtetes Aluminiumpigment mit d₅₀ = 32 µm; Fa. Eckart GmbH & Co. KG, Fürth, Deutschland) werden mit 80 g Butylglycol zu einer homogenen Pigmentpaste vermischt. Anschließend werden 40 g Resydrol AH 509w/45WA (Phosphorsäure modifiziertes Acrylatharz; Fa. Cytec, Graz, Österreich) unter Rühren hinzugegeben. Diese Pigmentpaste wird über Nacht stehen gelassen.
Die Herstellung des Elektrotauchlackes erfolgt wie in Beispiel 1.

### Erfindungsgemäßes Beispiel 5:

Die Herstellung des beschichteten Aluminiumpigmentes erfolgt wie in Beispiel 4, jedoch mit einem Aluminiumeffektpigment mittlerer Teilchengröße d₅₀ = 18 µm, PCA 9155 (Fa. Eckart GmbH & Co. KG).
Die Herstellung des Elektrotauchlackes erfolgt wie in Beispiel 1.

### Erfindungsgemäßes Beispiel 6:

Die Herstellung des beschichteten Aluminiumpigmentes erfolgt wie in Beispiel 4, jedoch mit einem leafing Aluminiumeffektpigment mittlerer Teilchengröße d₅₀ = 18 µm, VP 53 976 (Fa. Eckart GmbH & Co. KG).
Die Herstellung des Elektrotauchlackes erfolgt wie in Beispiel 1.

### Vergleichsbeispiel 7:

Die Herstellung erfolgt wie in Beispiel 1, jedoch mit einem sehr groben Aluminiumpigment, PCA 211 (Fa. Eckart GmbH & Co.KG) mit einer mittleren Teilchengröße d₅₀ = 73 µm.

### Vergleichsbeispiel 8 (anodische Tauchlackierung):

Die Herstellung des anodischen Tauchlackes erfolgt wie in Beispiel 1, jedoch mit 26 g eines Aluminiumeffektpigmentes mittlerer Teilchengröße D₅₀ = 18 µm, PCA 9155 (Fa. Eckart GmbH & Co. KG) in Pastenform (Festkörper: 50 Gew.-%) ohne vorherige Beschichtung mit dem Polyol modifizierte Polyester.

Im Gegensatz zu den erfindungsgemäßen Beispielen 1 bis 3 wurden hier 40 g des Polyol modifizierten Polyesters (SETAL 6306 SS-60, Fa. Akzo Nobel) erst nach der Einarbeitung der Metallpigmentpaste in den handelsüblichen anodischen Tauchlack (Fa. Frei Lacke) in das Elektrotauchbad eingetragen.

Die Zugabe erfolgt also nicht wie in den erfindungsgemäßen Beispielen 1 bis 3 durch eine direkte Anpastung des Beschichtungsmittels mit dem Aluminiumeffektpigment vor dem Auflacken.

### Vergleichsbeispiel 9 :

PCA 9155 (Fa. Eckart GmbH & Co. KG), ein mit Kunstharz beschichtetes Aluminiumeffektpigment mittlerer Teilchengröße D₅₀ = 18 µm in Pastenform (Festkörper 50 Gew.-%) wird ohne weitere Beschichtung in den anodischen Elektrotauchlack eingearbeitet. Im Gegensatz zu den erfindungsgemäßen Beispielen 4 bis 6 wird hier das Phosphorsäure modifiziertes Acrylatharz erst bei der Zugabe des handelsüblichen anodischen Tauchlacks (Fa. Frei Lacke) in das Elektrotauchbad eingetragen. Die Zugabe erfolgt somit nicht wie in den erfindungsgemäßen Beispielen 4 bis 6 durch eine direkte Anpastung des Additivs (Beschichtungsmittel) mit dem Aluminiumeffektpigment vor dem Elektrotauchlackieren.

### Vergleichsbeispiel 10 (anodische Tauchlackierung):

Die Auflackung erfolgt wie in Beispiel 1 mit 26 g eines Aluminiumeffektpigmentes mittlerer Teilchengröße D₅₀ = 18 µm, PCA 9155 (Fa. Eckart GmbH & Co. KG) in Pastenform (Festkörper 50 Gew.-%) ohne weitere Beschichtung. Dem Tauchlack wird auch kein weiteres Beschichtungsmittel zugegeben.

Der elektrochemische Abscheidevorgang der anodischen Elektrotauchlacke erfolgt in einem leitenden Gefäß, einem sogenannten Tank, welches aus einem leitfähigen Material besteht, und im Stromkreis als Kathode geschaltet wird. Das zu beschichtende Werkstück, im erfindungsgemäßen Beispiel ein Blech der Abmessungen 7,5 cm x 15,5 cm, wird als Anode geschaltet, und zu 2/3 seiner Länge in das Elektrotauchlackbad eingehängt.

Um eine Sedimentation sowie die Bildung von Toträumen zu verhindern, wird das Bad bei einer mittleren Strömungsgeschwindigkeit von ca. 0,1 m/s bewegt. Anschließend wird eine Spannung von 100 V über einen Zeitraum von 120 Sekunden angelegt. Das so beschichtete Werkstück wird anschließend gründlich mit destilliertem Wasser abgespült, um Reste von nicht koaguliertem Harz zu beseitigen. Dem Werkstück wurde hierauf eine Zeit von 10 Minuten zum Ablüften gewährt. Anschließend erfolgte die Vernetzung und Einbrennung des Elektrotauchlacks für 20 Minuten bei 180°C. Die so erzielte Lackschichtdicke beträgt 30 ± 2 µm.

Die nach den erfindungsgemäßen Beispielen 1 bis 3 hergestellten Elektrotauchlacke wiesen eine äußerst hohe Lager- und Abscheidestabilität in Bezug auf die darin enthaltenen Aluminiumeffektpigmente auf. Dies ist aus Tabelle 1 ersichtlich. Die Lacke wurden bei Raumtemperatur gelagert und in einem Zeitintervall von 7 Tagen elektrotauchlackiert. Nach 92 Tagen wurden diese Tests abgebrochen.

Alle erfindungsgemäßen und vergleichenden Beispiele 1 bis 5 wurden ebenfalls Gasungstests unterzogen. Dafür wurden 25 g der Elektrotauchlacke in eine Gasflasche mit Doppelkammerrohraufsatz bei 40 °C temperiert und die entwickelte Gasmenge (H₂, welches durch die Reaktion der Aluminiumpigmente mit Wasser entsteht) gemessen. Der Test gilt als bestanden, wenn nach 30 Tagen nicht mehr als 20 ml Wasserstoff entwickelt wurden.

Die Testergebnisse sind in Tabelle 1 zusammengefasst.

**Tabelle 1: Verhalten der anodischen Tauchlacke**

| **Probe** | **Abscheidestabilität (in d)** | **Gasung Nach 30 Tagen (ml H₂)** |
|---|---|---|
| Beispiel 1 | > 92 d | 5 |
| Beispiel 2 | > 92 d | 5 |
| Beispiel 3 | > 92 d | 5 |
| Beispiel 4 | > 92 d | 4 |
| Beispiel 5 | > 92 d | 5 |
| Beispiel 6 | > 92 d | 4 |
| Vergleichendes Beispiel 7 | ca. 28 d | 4 |
| Vergleichendes Beispiel 8 | < 7 d | 5 |
| Vergleichendes Beispiel 9 | < 7 d | 6 |
| Vergleichendes Beispiel 10 | < 7 d | nach 13 d |
| | | > 30 ml |

Für die erfindungsgemäßen Beispiele 1 - 6 wurden auch nach mehr als 92 Tagen Lagerzeit bei Raumtemperatur reproduzierbare Ergebnisse hinsichtlich des optischen Erscheinungsbildes der beschichteten Testbleche erhalten. Weiterhin zeigten sie keine nennenswerte Gasung in den wässrigen Elektrotauchlacken.

Die vergleichenden Beispiele 8 und 9 waren ebenfalls gasungsstabil, konnten jedoch praktisch keine Abscheide- bzw. Badstabilität aufweisen. Das bei dem vergleichenden Beispiel 7 verwendete grobe Aluminiumpigment war gasungsstabil und ließ sich zunächst reproduzierbar abscheiden. Nach vier Wochen jedoch nahm die Deckung der Elektrotauchlackierungsbeschichtung deutlich ab. Somit konnte auch hier keine befriedigende Badstabilität erzielt werden. Die ohne erfindungsgemäße Beschichtung ausgestatteten Aluminiumpigmente des vergleichenden Beispiels 10 sind weder gasungsstabil noch besitzen sie ausreichende Abscheidestabilität.

### Vergleichendes Beispiel 11 (Metallpigment haltiger Pulverlack):

9 g eines handelsüblichen Effektpigments für den Pulverlack, Spezial PCA 214 (Fa. Eckart Werke GmbH), werden mit 291 g eines Pulverklarlacks, AL 96 Polyester PT 910 System (Fa. Du Pont), und 0,6 g eines sogenannten "free-flow-additives", Acematt OK 412 (Fa. Degussa), in einem Plastikbeutel innig miteinander vereint. Der Inhalt wird anschließend direkt in einen Mischbehälter umgefüllt, welcher vom Aufbau und Form einem handelsüblichen Küchenmixgerät gleicht (Thermomix der Fa. Vorwerk), und 4 Minuten bei 25°C auf einer mittleren Rührgeschwindigkeitsstufe vermengt. Diese Vorgehensweise entspricht dem im Pulverlack gängigen "dry-blend-Verfahren". Das so hergestellte System wird mittels der üblichen Korona-Aufladungstechnik (GEMA Elektrostatikspritzpistole PG 1-B) auf ein übliches Prüfblech ("Q-Pannel") appliziert. Die Applikationsbedingungen der hier angewandten Pulverlacktechnik entsprechen den folgenden:
Pulverschlauchanschluss: 2 bar; Spülluftanschluss: 1,3 bar Spannung: 60 kV;
Materialflussregler: ca. 50 % Abstand Pistole-Blech: ca. 30 cm.
Anschließend erfolgt das Einbrennen und die Vernetzung des Pulverlacksystems im Ofen. Die Einbrennzeit beträgt 10 Minuten bei einer Temperatur von 200 °C. Die bei diesem Verfahren zu erzielende Trockenschichtstärke beträgt 50 - 75 µm.

### Vergleichendes Beispiel 12 (Metallpigment haltiger Pulverlack):

Wie das vergleichende Beispiel 6, jedoch wurde als Metalleffektpigment Spezial PCA 9155 (Fa. Eckart Werke GmbH) verwendet.

Die unterschiedlichen Applikationen der erfindungsgemäßen Beispiele 1 - 6 sowie der vergleichenden Beispiele 7 bis 10 wurden mit den nach Pulverlacktechnotogie beschichteten Substraten der vergleichenden Beispiele 11 und 12 verglichen. Zur vergleichenden Beurteilung wurden, wie in den Beispielen 1 - 6 aufgezeigt, Aluminiumeffektpigmente ähnlicher Teilchengröße und coloristischer Eigenschaften eingesetzt.

Überraschenderweise zeigen die Applikationen der erfindungsgemäßen Beispiele 1 bis 6 eine hervorragende Deckfähigkeit, welche in Güte und Qualität der der Pulverlackbeschichtung des vergleichenden Beispiels 10 und 11 entsprechen.

Der Vergleich der optischen Eigenschaften erfolgt über den visuellen Eindruck des Beobachters. Überraschenderweise zeigt sich hier, dass die erfindungsgemäßen Beispiele 1 , 2, 4 und 6 hinsichtlich Helligkeit und metallischem Effekt keinen nennenswerten Unterschiede zur konventionellen Pulverlackapplikationen der Vergleichsbeispiele 11 und 12 aufweisen.

Bei der Beurteilung der optischen Eigenschaften wird Bezug auf die DIN 53 230 genommen. Bei der Prüfung von Anstrichstoffen, Lackierungen und ähnlichen Beschichtungen müssen die Eigenschaften und/oder deren Änderungen oft subjektiv beurteilt werden. Die DIN 53 230 legt für diesen Fall ein einheitliches Bewertungssystem fest. In diesem wird beschrieben, wie Prüfergebnisse welche nicht durch unmittelbar erhaltene Messwerte angegeben werden können, zu bewerten sind.

Zur Beurteilung der erfindungsgemäßen und vergleichenden Beispiele 1 - 12 wird Bezug auf die in der DIN 53 230 unter 2.1 erläuterten "Festen Bewertungsskala" genommen. Die feste Bewertungsskala stellt eine Skala zur Bewertung des Grades von Eigenschaften dar. In Ihr wird der bestmögliche Wert mit der Kennzahl 0, der geringstmögliche Wert mit der Kennzahl 5 bezeichnet, wobei der Begriff "geringstmöglicher Wert" so zu verstehen ist, dass eine Veränderung oder Verschlechterung über diesen Wert hinaus anwendungstechnisch nicht mehr von Interesse ist.

In Tab. 2 sind die in Bezug auf die DIN 53230 Abs.2.1 ermittelten coloristischen und optischen Eigenschaften wiedergegeben. Die Ermittlung der Kennzahlen erfolgte durch den subjektiven Eindruck mehrerer Personen. In allen Fällen konnte eine Übereinstimmung des subjektiven Eindrucks der beurteilenden Personen festgestellt werden.

**Tab.2: Optischer Vergleich der Elektrotauchlackapplikationen der erfindungsgemäßen und vergleichenden Beispiele 1 - 12.**

| Probe | Mittlere Teilchengröße D₅₀ [µm] | Deckfähigkeit [Kennzahl] | Helligkeit [Kennzahl] | Genereller visueller Eindruck |
|---|---|---|---|---|
| erfindungsgemäßes Beispiel 1 | 32 | 1 | 1 | sehr guter metallischer "sparkling"-Effekt |
| erfindungsgemäßes Beispiel 2 | 16 | 0 | 1 | sehr metallisch geringerer "sparkling"- Effekt |
| erfindungsgemäßes Beispiel 3 | 18 | 1 | 1 | sehr guter metallischer leafing Effekt, hoher Glanz, abriebsbeständig |
| erfindungsgemäßes Beispiel 4 | 32 | 1 | 0 | sehr guter metallischer "sparkling"-Effekt |
| erfindungsgemäßes Beispiel 5 | 16 | 0 | 1 | sehr metallisch geringerer "sparkling"- Effekt |
| erfindungsgemäßes Beispiel 6 | 18 | 1 | 1 | sehr guter metallischer leafing Effekt, hoher Glanz, abriebsbeständig |
| Vergleichsbeispiel 7 | 73 | 3 | 1 | Starker metallischer "Sparkle" Effekt |
| Vergleichsbeispiel 8 | 16 | 3 | 3 | geringerer metallischer Effekt durch fehlende Deckfähigkeit |
| Vergleichsbeispiel 9 | 16 | 3 | 3 | geringerer metallischer Effekt durch fehlende Deckfähigkeit |
| Vergleichsbeispiel 10 | 18 | 5 | 5 | Praktisch kein Metallpigment abgeschieden |
| Vergleichsbeispiel 11 | 32 | 0 | 1 | sehr guter metallischer "sparkling"-Effekt |
| Vergleichsbeispiel 12 | 16 | 0 | 0 | sehr metallisch geringerer "sparkling"- Effekt |

Der oben aufgezeigte Vergleich zeigt, dass die erfindungsgemäß entwickelten Pigmente und Pigmentpräparationen 1, 2, 4 und 6 hinsichtlich optischer Eigenschaften vergleichbar sind mit den schon seit vielen Jahren im Markt etablierten Pulverlackpigmenten und Applikationen. Aus dem Vergleich der Kennzahlen der erfindungsgemäßen Beispielen 1 und 2 sowie 4 und 6 mit den vergleichenden Beispielen 11 und 12 geht eindeutig hervor, dass die optischen Eigenschaften in Bezug auf Deckung, Glanz und metallischen Effekt nahezu identisch sind.

Die erfindungsgemäßen Beispiele 3 und 6 zeigen überraschenderweise auch in einer Elektrotauchlackierung einen optischen Eindruck, der an eine konventionelle leafing-Lackierung erinnert. Im Gegensatz zu konventionellen leafing-Lackierungen war die Applikation jedoch überraschenderweise abriebstabil.

Das vergleichende Beispiel 7 zeigt ebenfalls gute optische Eigenschaften, bedingt durch das sehr grobe Aluminiumpigment ist hier die Deckfähigkeit gering, jedoch ist ein starker metallischer "Sparkle"-Effekt zu bemerken. Dieses Pigment jedoch hatte keine ausreichende Badstabilität.

Die vergleichenden Beispiele 8 und 9, bei welchen das Beschichtungsmittel erst im letzten Schritt der Elektrotauchbadherstellung direkt in selbiges eingetragen wurde, weist Abweichungen auf. Bei dieser Variante zeigen sich deutliche Einbußen hinsichtlich Deckung, Glanz und einhergehend damit im metallischen Effekt.

Ein überhaupt nicht mit einem Beschichtungsmittel (Vergleichsbeispiel 10) behandeltes Metallpigment lässt sich praktisch nicht im anodischen Elektrotauchlack abscheiden, obwohl das Metallpigment eine Kunstharzhülle aufweist.

Daraus lässt sich Schlussfolgern, dass es erfindungsgemäß offenbar nötig ist, dass das Beschichtungsmittel (Additiv) unmittelbar zum Pigment selber und nicht erst später in das Lackbad zugegeben wird. Es wird vermutet, dass das Additiv mit seinen pigmentophilen Gruppen eine physi- und/oder chemisorptive Verknüpfung an der Pigmentoberfläche auszubilden vermag, welche dann anscheinend eine entscheidende Schlüsselrolle im Abscheideverhalten des Pigments spielt.

## Patentansprüche

1. Anodischer Elektrotauchlack umfassend mindestens ein Bindemittel für anodischen Elektrotauchlack und wässriges Flüssigmedium,
**dadurch gekennzeichnet,**
**dass** der anodische Elektrotauchlack zusätzlich mindestens ein mit einem Beschichtungsmittel beschichtetes plättchenförmiges Metallpigment enthält,
wobei
(a) das plättchenförmige Metallpigment einen d₅₀-Wert der Summendurchgangsgrößenverteilung von 4 bis 35 µm besitzt und aus der Gruppe, die aus leafing-Metalipigmenten, mit Kunstharz(en) beschichteten Metallpigmenten und Mischungen davon besteht, ausgewählt ist, wobei die mittels Lasergranutometde als Kugeläquivalent ermittelte mittlere Längsausdehnung (d₅₀-Wert der Summendurchgangskurve) der plättchenförmigen Metallpigmente mindestens das Zehnfache der mittleren Dicke beträgt, und
(b) das Beschichtungsmittel ein Beschichtungsmittel mit einem organischen Grundgerüst mit mindestens 10 C-Atomen ist, das eine oder mehrere funktionelle Gruppen zur Anhaftung oder Anbindung an die Pigmentoberfläche besitzt, wobei die funktionelle Gruppe aus der Gruppe, die aus Phosphonsäuren, Phosphonsäureester, Phosphorsäuren, Phosphorsäureester, Sulphonat, Polyol und deren Mischungen besteht, ausgewählt ist, und
(c) das Beschichtungsmittel saure Eigenschaften aufweist.

2. Anodischer Elektrotauchlack nach Anspruch 1,
**dadurch gekennzeichnet,**
**dass** der Elektrotauchlack das Metallpigment in einer Konzentration von 0,5 bis 5 Gew.-%, bezogen auf das Gewicht des gesamten Lackes, enthält.

3. Anodischer Elektrotauchlack nach Anspruch 1 oder 2,
**dadurch gekennzeichnet,**
**dass** der Elektrotauchlack das Bindemittel in einer Konzentration von 5 bis 15 Gew.-%, bezogen auf das Gewicht des gesamten Lackes, enthält.

4. Anodischer Elektrotauchlack nach einem der Ansprüche 1 bis 3,
**dadurch gekennzeichnet,**
**dass** das Bindemittel aus der Gruppe, die aus Epoxidharzen, Acrylaten, Methacrylaten, Polyestern, Melaminharzen, Maleinaten und deren Copolymeren und Mischungen davon besteht, ausgewählt ist.

5. Anodischer Elektrotauchlack nach einem der vorhergehenden Ansprüche,
**dadurch gekennzeichnet,**
**dass** die plättchenförmigen Metallpigmente aus Metallen oder Legierungen, die aus der Gruppe, die aus Aluminium, Kupfer, Zink, Messing, Eisen, Titan, Chrom, Nickel, Stahl, Silber und Legierungen davon besteht, ausgewählt sind.

6. Anodischer Elektrotauchlack nach einem der vorhergehenden Ansprüche,
**dadurch gekennzeichnet,**
**dass** die Kunstharzbeschichtung des Metallpigmentes mindestens ein Acrylat und/oder Methacrylat umfasst.

7. Anodischer Elektrotauchlack nach einem der vorhergehenden Ansprüche,
**dadurch gekennzeichnet,**
**dass** das leafing-Metallpigment ein in Gegenwart von Fettsäure oder Fettsäuren, die unverzweigte oder verzweigte Alkylketten mit vorzugsweise jeweils 10 bis 30 C-Atomen aufweisen können, vermahlenes und/oder nachpoliertes Metallpigment ist, wobei als Fettsäure(n) Stearinsäure und/oder Palmitinsäure bevorzugt ist.

8. Anodischer Elektrotauchlack nach einem der vorhergehenden Ansprüche,
**dadurch gekennzeichnet,**
**dass** das organische Grundgerüst des Beschichtungsmittels des Metallpigmentes 10 bis 800 C-Atome, vorzugsweise 12 bis 100 C-Atome, umfasst und aus der Gruppe, die aus Alkyl, Alkenyl, Alkinyl, Aryl, Alkylaryl, Arylalkyl, Alkenylaryl, Arylalkinyl, Alkinylaryl, Cycloalkyl, Alkylcycloalkyl, Cycloalkylalkyl, perfluoriertes Alkyl, teilfluoriertes Alkyl, perfluoriertes Aryl, teilfluoriertes Aryl, perfluoriertes Alkylaryl und teilfluoriertes Alkylaryl sowie deren Kombinationen und Mischungen davon besteht, ausgewählt wird.

9. Anodischer Elektrotauchlack nach einem der vorhergehenden Ansprüche,
**dadurch gekennzeichnet,**
**dass** das Beschichtungsmittel anodisch abscheidbar ist.

10. Anodischer Elektrotauchlack nach einem der vorhergehenden Ansprüche,
**dadurch gekennzeichnet,**
**dass** das Beschichtungsmittel ein Bindemittel für anodischen Elektrotauchlack ist.

11. Anodischer Elektrotauchlack nach einem der vorhergehenden Ansprüche,
**dadurch gekennzeichnet,**
**dass** das Beschichtungsmittel ein oder mehrere Bindemittelfunktionalitäten von anodischen Tauchlack-Bindemitteln aufweist, wobei die Bindemittelfunktionalität aus der Gruppe, die aus Polyepoxiden, Polyacrylaten, Polymethacrylaten, Melaminharzen, Maleinaten, deren Copolymeren und deren Mischungen besteht, ausgewählt ist.

12. Anodischer Elektrotauchlack nach einem der vorhergehenden Ansprüche,
**dadurch gekennzeichnet,**
**dass** das Beschichtungsmittel eine Säurezahl von 15 bis 300 mg KOH/g Beschichtungsmittel besitzt.

13. Anodischer Elektrotauchlack nach einem der vorhergehenden Ansprüche,
**dadurch gekennzeichnet,**
**dass** das Beschichtungsmittel ein Phosphorsäureester der Formel (I) oder ein Phosphonsäureester der Formel (II) ist: 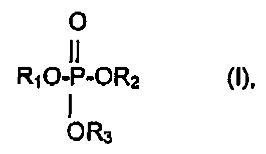 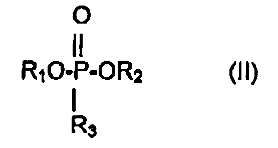 wobei R₁, R₂ und R₃ unabhängig voneinander
- Alkyl mit 10 bis 20 C-Atomen, die geradkettig oder verzweigtkettig und optional mit Fluor und/oder Hydroxyl substituiert sein können,
- Aryl mit 6 bis 24 C-Atomen, die mit Alkyl mit 1 bis 6 C-Atomen, Fluor und/oder Hydroxyl substituiert sein können, wobei die Gesamtzahl an C-Atomen wenigstens 10 beträgt,
sind,
wobei R₁ und R₂ unabhängig voneinander auch Wasserstoff sein können.

14. Anodischer Elektrotauchlack nach Anspruch 13,
**dadurch gekennzeichnet,**
**dass** das plättchenförmige Metallpigment ein leafing-Metallpigment ist.

15. Anodischer Elektrotauchlack nach einem der vorangehenden Ansprüche,
**dadurch gekennzeichnet,**
**dass** das Beschichtungsmittel ein Phophorsäuredialkylester oder Phosphonsäuredialkylester ist, wobei beide Alkylketten unabhängig voneinander jeweils eine Kettenlänge mit 10 bis 18 Kohlenstoffatomen aufweisen.

16. Verfahren zur Herstellung eines Elektrotauchlackes nach einem der Ansprüche 1 bis 15,
**dadurch gekennzeichnet,**
das es die folgenden Schritten umfaßt:
a) Beschichten des Metallpigmentes mit dem Beschichtungsmittel
b) Vermischen des unter a) erhaltenen beschichteten Metallpigmentes mit mindestens einem organischen Lösemittel oder Lösemittelgemisch und optional mit mindestens einem Bindemittel des Elektrotauchlackes unter Erhalt eines Metallpigmentaufschlusses,
c) Vermischen des unter b) erhaltenen Metallpigmentaufschlusses mit einer wässrigen Dispersion von weiterem und/oder wenigstens einem anderen Bindemittel des Elektrotauchlackes,
d) Zugeben von weiterem Wasser mindestens bis zum Erhalt einer dünnflüssigen Konsistenz,
wobei die Menge des zugegebenen Wassers in einer vollentsalzten Qualität hierbei 25 Gew.-% bis 50 Gew.-% des Gesamtgewichts der Metallpigment/Bindemitteldispersion beträgt,
e) Zugeben von Base in Schritt c) oder d) bis zum gewünschten pH-Wert..

17. Verwendung eines anodischen Elektrotauchlackes nach einem der Ansprüche 1 bis 15 zur Beschichtung eines elektrisch leitfähigen Untergrundes oder Gegenstandes.

18. Mit anodischem Elektrotauchlack nach einem der Ansprüche 1 bis 15 beschichteter Gegenstand, der vorzugsweise aus der Gruppe, die aus Heizungskörper, Tankanlagen, Automobilkarosserien, Automobllzubehörteilen, Haus- und Elektrogeräten, Möbeln, Stahlmöbeln, Bauelementen und Bau- und Landwirtschaftsgeräten besteht, ausgewählt wird.

19. Verwendung von plättchenförmigen leafing-Metallpigmenten, die mit einem. Phosphorsäureester der Formel (I) oder ein Phosphonsäureester der Formel (II) beschichtet sind: 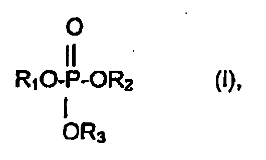 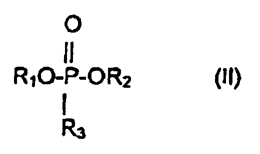 wobei R₁, R₂ und R₃ unabhängig voneinander
- Alkyl mit 10 bis 20 C-Atomen, die geradkettig oder verzweigtkettig und optional mit Fluor und/oder Hydroxyl substituiert sein können,
- Aryl mit 6 bis 24 C-Atomen, die mit Alkyl mit 1 bis 6 C-Atomen, Fluor und/oder Hydroxyl substituiert sein können, wobei die Gesamtzahl an C-Atomen wenigstens 10 beträgt,
sind, wobei R₁ und R₂ unabhängig voneinander auch Wasserstoff sein können, und wobei die Pigmente einen d₅₀-Wert der Summendurchgangsgrößenverteilung von 4 bis 35 µm, wobei die mittels Lasergranulometrie als Kugeläquivalent ermittelte mittlere Längsausdehnung (d₅₀-Wert der Summendurchgangskurve) der plättchenförmigen Metallpigmente mindestens das Zehnfache der mittleren Dicke beträgt, aufweisen, zur
Herstellung eines anodischen Elektrotauchlackes oder bei der anodischen Elektrotauchlackierung.

20. Verwendung nach Anspruch 19,
**dadurch gekennzeichnet,**
**dass** das Beschichtungsmittel ein Phophorsäuredlalkylester oder Phosphonsäuredialkylester ist, wobei beide Alkylketten unabhängig voneinander jeweils eine Kettenlänge mit 10 bis 18 Kohlenstoffatomen aufweisen.

21. Verwendung nach Anspruch 19 oder 20,
**dadurch gekennzeichnet,**
**dass** die plättchenförmigen Metallpigmente aus Metallen oder Legierungen, die aus der Gruppe, die aus Aluminium, Kupfer, Zink, Messing, Eisen, Titan, Chrom, Nickel, Stahl, Silber und Legierungen davon besteht, ausgewählt sind.

22. Verwendung von plättchenförmigen leafing-Metallpigmenten und/oder mit Kunstharz(en) beschichteten Metallpigmenten, wobei die Pigmente mit einem Beschichtungsmittel, das ein organisches Grundgerüst mit 10 bis 800 C-Atome, vorzugsweise 12 bis 100 C-Atomen, umfasst und aus der Gruppe, die aus Alkyl, Alkenyl, Alkinyl, Aryl, Alkylaryl, Arylalkyl, Alkenylaryl, Arylalkinyl, Alkinylaryl, Cycloalkyl, Alkylcycloalkyl, Cycloalkylalkyl, perfluoriertes Alkyl, teilfluoriertes Alkyl, perfluoriertes Aryl, teilfluoriertes Aryl, perfluoriertes Alkylaryl und teilfluoriertes Alkylaryl sowie deren Kombinationen und Mischungen davon besteht, ausgewählt wird, beschichtet sind, und wobei die Pigmente einen d₅₀-Wert der Summendurchgangsgrößenverteilung von 4 bis 35 µm, wobei die mittels Lasergranulometrie als Kugeläquivalent ermittelte mittlere Längsausdehnung (d₅₀-Wert der Summendurchgangskurve) der plättchenförmigen Metallpigmente mindestens das Zehnfache der mittleren Dicke beträgt, aufweisen zur Herstellung eines anodischen Elektrotauchlackes oder bei der anodischen Elektrotauchlackierung.

## Claims

1. Anodic electrophoretic paint comprising at least one binding agent for anodic electrophoretic paint and an aqueous liquid medium, **characterised in that**
the anodic electrophoretic paint additionally contains at least one platelet-type metal pigment coated with a coating agent, and
(a) the platelet-type metal pigment has a d₅₀ value of the cumulative size distribution curve of from 4 to 35 µm and is selected from the group comprising leafing metal pigments, metal pigments coated with resin(s) and mixtures thereof, and the mean longitudinal extension (d₅₀ value of the cumulative size distribution curve) of the platelet-type metal pigments is at least ten times the mean thickness, measured on the basis of the equivalent sphere by laser granulometry, and
(b) the coating agent is a coating agent with an organic backbone with at least 10 C atoms, containing one or more functional groups for imparting adhesion or bonding to the pigment surface, and the functional group is selected from phosphonic acids, phosphonic acid esters, phosphoric acids, phosphoric acid esters, sulphonate, polyol and mixtures thereof, and
(c) the coating agent has acid properties.

2. Anodic electrophoretic paint as claimed in claim 1,
**characterised in that**
the electrophoretic paint contains metal pigment in a concentration of from 0.5 to 5 % by weight by reference to the weight of the total paint.

3. Anodic electrophoretic paint as claimed in claim 1 or 2,
**characterised in that**
the electrophoretic paint contains binding agent in a concentration of from 5 to 15 % by weight b reference to the weight of the total paint.

4. Anodic electrophoretic paint as claimed in one of claims 1 to 3,
**characterised in that**
the binding agent is selected from the group comprising epoxy resins, acrylates, methacrylates, polyesters, melamine resins, maleinates and copolymers and mixtures thereof.

5. Anodic electrophoretic paint as claimed in one of the preceding claims,
**characterised in that**
the platelet-type metal pigments are based on metals or alloys selected from the group comprising aluminium, copper, zinc, brass, iron, titanium, chromium, nickel, steel, silver and alloys thereof.

6. Anodic electrophoretic paint as claimed in one of the preceding claims,
**characterised in that**
the synthetic resin coating of the metal pigment contains at least one acrylate and/or methacrylate.

7. Anodic electrophoretic paint as claimed in one of the preceding claims,
**characterised in that**
the leafing metal pigment is a metal pigment which has been ground and/or subsequently polished in the presence of a fatty acid or fatty acids which may contain non-branched or branched alkyl chains, preferably with 10 to 30 C atoms respectively, and the preferred fatty acid(s) is stearic acid and/or palmitic acid.

8. Anodic electrophoretic paint as claimed in one of the preceding claims,
**characterised in that**
the organic backbone of the coating agent of the metal pigment contains 10 to 800 C atoms, preferably 12 to 100 C atoms and is selected from the group comprising alkyl, alkenyl, alkinyl, aryl, alkylaryl, arylalkyl, alkenylaryl, arylalkinyl, alkinylaryl, cycloalkyl, alkylcycloalkyl, cycloalkylalkyl, perfluorinated alkyl, partially fluorinated alkyl, perfluorinated aryl, partially fluorinated aryl, perfluorinated alkylaryl and partially fluorinated alkylaryl and combinations and mixtures thereof.

9. Anodic electrophoretic paint as claimed in one of the preceding claims,
**characterised in that**
the coating agent can be anodically deposited.

10. Anodic electrophoretic paint as claimed in one of the preceding claims,
**characterised in that**
the coating agent is a binding agent for anodic electrophoretic paint.

11. Anodic electrophoretic paint as claimed in one of the preceding claims,
**characterised in that**
the coating agent has one or more binding agent functionalities of anodic electrophoretic paint binding agents, and the binding agent functionality is selected from the group comprising polyepoxides, polyacrylates, polymethacrylates, melamine resins, maleinates, copolymers and mixtures thereof.

12. Anodic electrophoretic paint as claimed in one of the preceding claims,
**characterised in that**
the coating agent has an acid number of from 15 to 300 mg KOH/g of coating agent.

13. Anodic electrophoretic paint as claimed in one of the preceding claims,
**characterised in that**
the coating agent is a phosphoric acid ester based on formula (I) or a phosphonic acid ester based on formula (II): 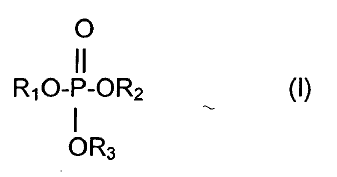 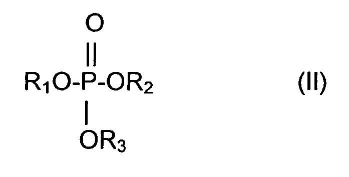 where R₁, R₂ and R₃ are independent of one another and stand for
- alkyl with 10 to 20 C atoms, which may be straight-chained or branched and optionally substituted with fluorine and/or hydroxyl,
- aryl with 6 to 24 C atoms, which may be substituted with alkyl with 1 to 6 C atoms, fluorine and/or hydroxyl, and the total number of C atoms is at least 10,
and, independently of one another, R₁ and R₂ may also be hydrogen.

14. Anodic electrophoretic paint as claimed in claim 13,
**characterised in that**
the platelet-type metal pigment is a leafing metal pigment.

15. Anodic electrophoretic paint as claimed in one of the preceding claims,
**characterised in that**
the coating agent is a phosphoric acid dialkyl ester or phosphonic acid dialkyl ester, and both alkyl chains, independently of one another, have a chain length of 10 to 18 carbon atoms respectively.

16. Method of producing an electrophoretic paint as claimed in one of claims 1 to 15,
**characterised in that**
it comprises the following steps:
a) coating the metal pigment with a coating agent,
b) mixing the coated metal pigment obtained under a) with at least one organic solvent or solvent mixture and optionally with at least one binding agent of the electrophoretic paint to obtain a metal pigment pulp,
c) mixing the metal pigment pulp obtained under b) with an aqueous dispersion of other and/or at least one other binding agent of the electrophoretic paint,
d) adding additional water, at least until a thin consistency is obtained, the quantity of added water of a fully demineralised quality being 25% by weight to 50 % by weight of the total weight of the metal pigment/ binding agent dispersion,
e) adding base in step c) or d) to obtain the desired pH value.

17. Use of an anodic electrophoretic paint as claimed in one of claims 1 to 15 for coating an electrically conductive substrate or object.

18. Object coated with anodic electrophoretic paint as claimed in one of claims 1 to 15, preferably selected from the group comprising radiators, fuel tank systems, automobile bodies, automobile accessories, domestic and electric appliances, furniture, steel furniture, components and building and agricultural equipment.

19. Use of platelet-type leafing metal pigments coated with a phosphoric acid ester based on formula (I) or a phosphonic acid ester based on formula (II): 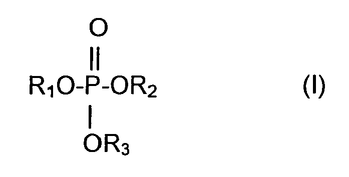 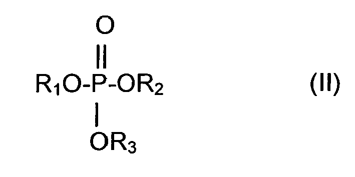 where R₁, R₂ and R₃, independently of one another, stand for
- alkyl with 10 to 20 C atoms, which may be straight-chained or branched and optionally substituted with fluorine and/or hydroxyl,
- aryl with 6 to 24 C atoms, which may be substituted with alkyl with 1 to 6 C atoms, fluorine and/or hydroxyl, and the total number of C atoms is at least 10,
and, independently of one another, R₁ and R₂ may also be hydrogen, and the pigments have a d₅₀ value of the cumulative size distribution curve of 4 to 35 µm, and the mean longitudinal extension (d₅₀ value of the cumulative size distribution curve) of the platelet-type metal pigments is at least ten times the mean thickness, measured as the equivalent sphere by means of laser granulometry, for producing an electrophoretic paint or for applying anodic electrophoretic paint.

20. Use as claimed in claim 19,
**characterised in that**
the coating agent is a phosphoric acid dialkyl ester or phosphonic acid dialkyl ester, and both alkyl chains, independently of one another, have a chain length of 10 to 18 carbon atoms respectively.

21. Use as claimed in claim 19 or 20,
**characterised in that**
the platelet-type metal pigments are based on metals or alloys selected from the group comprising aluminium, copper, zinc, brass, iron, titanium, chromium, nickel, steel, silver and alloys thereof.

22. Use of platelet-type leafing metal pigments and/or metal pigments coated with synthetic resin(s), and the pigments are coated with a coating agent which has an organic backbone with 10 to 800 C atoms, preferably 12 to 100 C atoms, and is selected from the group comprising alkyl, alkenyl, alkinyl, aryl, alkylaryl, arylalkyl, alkenylaryl, arylalkinyl, alkinylaryl, cycloalkyl, alkylcycloalkyl, cycloalkylalkyl, perfluorinated alkyl, partially fluorinated alkyl, perfluorinated aryl, partially fluorinated aryl, perfluorinated alkylaryl and partially fluorinated alkylaryl and combinations and mixtures thereof, and the pigments have a d₅₀ value of the cumulative size distribution curve of from 4 to 35 µm, and the mean longitudinal extension (d₅₀ value of the cumulative size distribution curve) of the platelet-type metal pigments is at least ten times the mean thickness, measured as the equivalent
sphere by means of laser granulometry, to produce an anodic electrophoretic paint or for applying an anodic electrophoretic paint.

## Revendications

1. Peinture électrophorétique anodique, comprenant au moins un liant pour la peinture électrophorétique anodique et un milieu liquide aqueux,
**caractérisée en ce que**
la peinture électrophorétique anodique contient en plus au moins un pigment métallique en forme de plaquettes enduit d'un moyen de revêtement, sachant que
(a) le pigment métallique en forme de plaquettes possède une valeur d₅₀ de la répartition granulométrique somme de 4 à 35 µm et est choisi parmi le groupe constitué des pigments métalliques en feuille, des pigments métalliques revêtus de résine(s) synthétique(s) et de mélanges de ceux-ci, la taille moyenne dans le sens de la longueur, déterminée par granulométrie au laser comme équivalent sphère (valeur d₅₀ de la répartition granulométrique somme) des pigments métalliques en forme de plaquettes étant au moins dix fois l'épaisseur moyenne, et
(b) le moyen de revêtement est un moyen de revêtement avec un squelette de base organique avec au moins 10 atomes de carbone, qui possède un ou plusieurs groupes fonctionnels pour adhérer ou s'accrocher à la surface du pigment, le groupe fonctionnel étant choisi parmi le groupe constitué des acides phosphoniques, des esters d'acides phosphoniques, des acides phosphoriques, des esters d'acides phosphoriques, des sulfonates, des polyols et de leurs mélanges, et
(c) le moyen de revêtement présente des propriétés acides.

2. Peinture électrophorétique anodique selon la revendication 1,
**caractérisée en ce que**
la peinture électrophorétique anodique contient le pigment métallique en une concentration de 0,5 à 5 % en poids, rapportée au poids de toute la peinture.

3. Peinture électrophorétique anodique selon la revendication 1 ou 2,
**caractérisée en ce que**
la peinture électrophorétique anodique comme contient le liant en une concentration de 5 à 15 % en poids, rapportée au poids de toute la peinture.

4. Peinture électrophorétique anodique selon l'une quelconque des revendications 1 à 3,
**caractérisée en ce que**
le liant est choisi parmi le groupe constitué des résines époxydes, des acrylates, des méthacrylates, des polyesters, des résines de mélamine, des maléates et de leurs copolymères et de mélanges de ces derniers.

5. Peinture électrophorétique anodique selon l'une quelconque des revendications précédentes,
**caractérisée en ce que**
les pigments métalliques en forme de plaquettes sont choisis parmi les métaux et les alliages du groupe constitué de l'aluminium, du cuivre, du zinc, du laiton, du fer, du titane, du chrome, du nickel, de l'acier, de l'argent et des alliages de ces derniers.

6. Peinture électrophorétique anodique selon l'une quelconque des revendications précédentes,
**caractérisée en ce que**
le revêtement en résine synthétique du pigment métallique en forme de plaquettes comprend au moins un acrylate et/ou un méthacrylate.

7. Peinture électrophorétique anodique selon l'une quelconque des revendications précédentes,
**caractérisée en ce que**
le pigment métallique en feuille est un pigment métallique moulu et/ou poli ultérieurement en présence d'acide gras ou d'acides gras qui peuvent comporter des chaînes alkyliques non ramifiées ou ramifiées avec de préférence 10 à 30 atomes de carbone, l'acide stéarique et/ou l'acide palmitique étant préférés comme acide(s) gras.

8. Peinture électrophorétique anodique selon l'une quelconque des revendications précédentes,
**caractérisée en ce que**
le squelette organique de base du moyen de revêtement du pigment métallique contient 10 à 800 atomes de carbone, de préférence 12 à 100 atomes de carbone, et est choisi parmi le groupe constitué des alkyles, des alcényles, des alcynyles, des aryles, des alkylaryles, des arylalkyles, des alcénylaryles, des arylalcynyles, des alcynylaryles, des cycloalkyles, des alkylcycloalkyles, des cycloalkylalkyles, des alkyles perfluorés, des alkyles partiellement fluorés, des aryles perfluorés, des aryles partiellement fluorés, des alkylaryles perfluorés et des alkylaryles partiellement fluorés, ainsi que de leurs combinaisons et des mélanges de ceux-ci.

9. Peinture électrophorétique anodique selon l'une quelconque des revendications précédentes,
**caractérisée en ce que**
le moyen de revêtement peut être déposé anodiquement.

10. Peinture électrophorétique anodique selon l'une quelconque des revendications précédentes,
**caractérisée en ce que**
le moyen de revêtement est un liant pour une peinture électrophorétique anodique.

11. Peinture électrophorétique anodique selon l'une quelconque des revendications précédentes,
**caractérisée en ce que**
le moyen de revêtement comporte une ou plusieurs fonctionnalités de liants de peinture électrophorétique anodique, la fonctionnalité de liant étant choisie parmi le groupe qui consiste en des polyépoxydes, des polyacrylates, des polyméthacrylates, des résines de mélamine, des maléates, de leurs copolymères et de leurs mélanges.

12. Peinture électrophorétique anodique selon l'une quelconque des revendications précédentes,
**caractérisée en ce que**
le moyen de revêtement possède un indice d'acidité de 15 à 300 mg de KOH/g de moyen de revêtement.

13. Peinture électrophorétique anodique selon l'une quelconque des revendications précédentes,
**caractérisée en ce que**
le moyen de revêtement est un ester de l'acide phosphorique de la formule (I) ou un ester de l'acide phosphonique de la formule (II) : 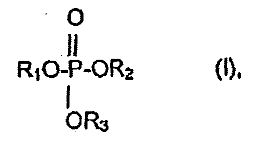 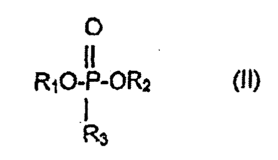 dans lesquelles R₁, R₂ et R₃ sont, indépendamment l'un de l'autre
- des alkyles avec 10 à 20 atomes de carbone qui peuvent être linéaires ou ramifiés et peuvent être substitués en option par un fluor et/ou un hydroxyle,
- des aryles avec 6 à 24 atomes de carbone, qui peuvent être substitués par des alkyles avec 1 à 6 atomes de carbone, des fluors et/ou des hydroxyles, le nombre total des atomes de carbone devant être d'au moins 10,
R₁ et R₂ pouvant aussi être, indépendamment l'un de l'autre, des hydrogènes.

14. Peinture électrophorétique anodique selon la revendication 13,
**caractérisée en ce que**
le pigment métallique en forme de plaquettes est un pigment métallique en feuilles.

15. Peinture électrophorétique anodique selon l'une quelconque des revendications précédentes,
**caractérisée en ce que**
le moyen de revêtement est un ester dialkylique d'un acide phosphorique ou un ester dialkylique d'un acide phosphonique, les deux chaînes alkyliques ayant chacune, indépendamment l'une de l'autre, une longueur de chaîne de 10 à 18 atomes de carbone.

16. Procédé de préparation d'une peinture électrophorétique anodique selon l'une quelconque des revendications 1 à 15,
**caractérisé en ce que**
il comprend les étapes suivantes :
a) revêtement du pigment métallique par le moyen de revêtement,
b) mélangeage du pigment métallique obtenu sous a) à au moins un solvant ou un mélange de solvants organique(s) et en option avec au moins un liant de la peinture électrophorétique moyennant l'obtention d'une dispersion de pigment métallique,
c) mélangeage de la dispersion de pigment métallique obtenue sous b) à une dispersion d'un liant supplémentaire et/ou d'un liant différent au moins de la peinture électrophorétique,
d) addition d'eau supplémentaire, au moins jusqu'à obtention d'une consistance fluide, la quantité de l'eau ajoutée, de qualité totalement déminéralisée étant en l'occurrence de 25 % en poids à 50 % en poids du poids total de la dispersion pigment métallique/liant,
e) addition de base à l'étape c) ou d) jusqu'au pH désiré.

17. Utilisation d'une peinture électrophorétique anodique selon l'une quelconque des revendications 1 à 15 pour le revêtement d'un substrat ou d'un objet conducteur de l'électricité.

18. Objet revêtu d'une peinture électrophorétique anodique selon l'une quelconque des revendications 1 à 15, qui est choisi de préférence parmi le groupe qui consiste en des radiateurs de chauffage central, des installations de citernes, des carrosseries d'automobile, des accessoires d'automobile, des appareils ménagers et électroménagers, des meubles, des meubles en acier, des éléments de construction et des machines de construction et des machines agricoles.

19. Utilisation de pigments métalliques en feuilles en forme de plaquettes qui sont revêtus d'un ester de l'acide phosphorique de la formule (I) ou un ester de l'acide phosphonique de la formule (II) : 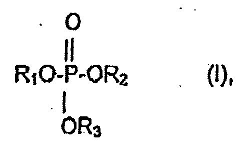 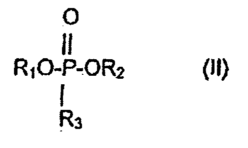 dans lesquelles R₁, R₂ et R₃ sont, indépendamment l'un de l'autre
- des alkyles avec 10 à 20 atomes de carbone qui peuvent être linéaires ou ramifiés et peuvent être substitués en option par un fluor et/ou un hydroxyle,
- des aryles avec 6 à 24 atomes de carbone, qui peuvent être substitués par des alkyles avec 1 à 6 atomes de carbone, des fluors et/ou des hydroxyles, le nombre total des atomes de carbone devant être d'au moins 10,
R₁ et R₂ pouvant aussi être, indépendamment l'un de l'autre, des hydrogènes, et les pigments présentant une valeur d₅₀ de la répartition granulométrique somme de 4 à 35 µm, la taille moyenne dans le sens de la longueur déterminée par granulométrie au laser comme équivalent sphère (valeur d₅₀ de la répartition granulométrique somme) des pigments métalliques en forme de plaquettes étant au moins dix fois l'épaisseur moyenne, à la préparation d'une peinture électrophorétique anodique ou lors du processus de peinture électrophorétique anodique.

20. Utilisation selon la revendication 19,
**caractérisée en ce que**
le moyen de revêtement est un ester dialkylique de l'acide phosphorique ou un ester dialkylique de l'acide phosphonique, les deux chaînes alkyles présentant chacune, indépendamment l'une de l'autre, une longueur de chaîne de 10 à 18 atomes de carbone.

21. Utilisation selon la revendication 19 ou 20,
**caractérisée en ce que**
les pigments métalliques en forme de plaquettes sont choisis parmi les métaux et les alliages du groupe qui consiste en l'aluminium, le cuivre, le zinc, le laiton, le fer, le titane, le chrome, le nickel, l'acier, l'argent et des alliages de ces derniers.

22. Utilisation de pigments métalliques en feuilles en forme de plaquettes et/ou de pigments métalliques revêtus de résine(s) synthétique(s), les pigments étant revêtus d'un moyen de revêtement qui comprend un squelette organique de base avec 10 à 800 atomes de carbone, de préférence 12 à 100 atomes de carbone, et qui est choisi parmi le groupe constitué des alkyles, des alcényles, des alcynyles, des aryles, des alkylaryles, des arylalkyles, des alcénylaryles, des arylalcynyles, des alcynylaryles, des cycloalkyles, des alkylcycloalkyles, des cycloalkylalkyles, des alkyles perfluorés, des alkyles partiellement fluorés, des aryles perfluorés, des aryles partiellement fluorés, des alkylaryles perfluorés et des alkylaryles partiellement fluorés, ainsi que de combinaisons et de mélanges de ceux-ci, les pigments métalliques présentant une valeur d₅₀ de la répartition granulométrique somme de 4 à 35 µm, la taille moyenne dans le sens de la longueur, déterminée par granulométrie au laser comme équivalent sphère (valeur d₅₀ de la répartition granulométrique somme) des pigments métalliques en forme de plaquettes, étant au moins dix fois l'épaisseur moyenne, à la préparation d'une peinture électrophorétique anodique ou lors du processus de peinture électrophorétique anodique.
